(19) Europäisches Patentamt
European Patent Office
Office européen des brevets

(11) **EP 4 477 439 A1**

(12) **EUROPEAN PATENT APPLICATION**
published in accordance with Art. 153(4) EPC

(43) Date of publication:
**18.12.2024 Bulletin 2024/51**

(21) Application number: **23854222.9**

(22) Date of filing: **29.07.2023**

(51) International Patent Classification (IPC):
**B60K 11/02** (2006.01)   **H02K 5/20** (2006.01)

(52) Cooperative Patent Classification (CPC):
Y02T 10/64

(86) International application number:
**PCT/CN2023/110062**

(87) International publication number:
**WO 2024/037318 (22.02.2024 Gazette 2024/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.08.2022 CN 202210995005**

(71) Applicant: **Huawei Digital Power Technologies
Co., Ltd.
Shenzhen, Guangdong 518043 (CN)**

(72) Inventors:
• **YANG, Peng**
  **Shenzhen, Guangdong 518043 (CN)**
• **TANG, Zhengyi**
  **Shenzhen, Guangdong 518043 (CN)**
• **TANG, Jiayu**
  **Shenzhen, Guangdong 518043 (CN)**
• **BIAN, Fei**
  **Shenzhen, Guangdong 518043 (CN)**

(74) Representative: **Maiwald GmbH
Engineering
Elisenhof
Elisenstrasse 3
80335 München (DE)**

(54) **POWERTRAIN AND VEHICLE**

(57)    This application provides a powertrain and a vehicle. The powertrain includes an enclosure, a separator, a motor, a first liquid return channel, and a second liquid return channel. The separator separates an interior of the enclosure into a first cavity and a second cavity. The motor is located in the first cavity, the motor includes a motor shaft, and the motor shaft extends into the second cavity through the separator. The first liquid return channel is located on an outer side of the enclosure and communicates with the first cavity and the second cavity, and is configured to convey liquid in the first cavity to the second cavity. The second liquid return channel is located on the outer side of the enclosure and communicates with the first cavity and the second cavity, and is configured to convey the liquid in the first cavity to the second cavity. The second liquid return channel and the first liquid return channel at most partially overlap in a circumferential direction of the motor shaft. In this application, with two liquid return channels provided, a liquid return requirement can be met when the powertrain is installed or disposed at any angle or used on a slope, improving adaptability and safety of the powertrain.

FIG. 3

## Description

This application claims priority to Chinese Patent Application No. 202210995005.7, filed with the China National Intellectual Property Administration on August 18, 2022 and entitled "POWERTRAIN AND VEHICLE", which is incorporated herein by reference in its entirety.

## TECHNICAL FIELD

This application relates to the field of motor technologies, and in particular, to a powertrain and a vehicle.

## BACKGROUND

A motor in an electrically driven powertrain is a key component in conversion of electrical energy into mechanical energy. During conversion of electrical energy into mechanical energy, there are various losses. Most of the losses are dissipated in a form of heat, resulting in an increase in a temperature of the motor. When the temperature rises to a specific level, key components in the motor such as windings, insulation, and bearings burn out due to the high temperature. In the conventional technology, a cooling oil passage is provided on an outer or inner side of a motor enclosure to dissipate heat from a motor. However, cooling oil in the oil passage located on the inner side enters an air gap of the motor, affecting performance of the motor. For the oil passage located on the outer side, a position of the oil passage is determined when an electrically driven powertrain is produced. For a purpose of meeting a circulation requirement of cooling oil in the oil passage and keeping the cooling oil from soaking into the air gap, an angle at which the electrically driven powertrain is installed in a vehicle can only vary in a quite small range, failing to meet requirements of adapting to different types of vehicles and requirements of flexible disposing.

## SUMMARY

This application provides a powertrain that is provided with two liquid return channels for flexible adaptation to different types of vehicles, and a vehicle that includes the powertrain.

According to a first aspect, this application provides a powertrain. The powertrain includes an enclosure, a separator, a motor, a first liquid return channel, and a second liquid return channel. The separator separates an interior of the enclosure into a first cavity and a second cavity. The motor is located in the first cavity, the motor includes a motor shaft, and the motor shaft extends into the second cavity through the separator. The first liquid return channel is located on an outer side of the enclosure and communicates with the first cavity and the second cavity, and is configured to convey liquid in the first cavity to the second cavity. The second liquid return channel is located on the outer side of the enclosure and communicates with the first cavity and the second cavity, and is configured to convey the liquid in the first cavity to the second cavity. The second liquid return channel and the first liquid return channel at most partially overlap in a circumferential direction of the motor shaft.

In this application, the first liquid return channel and the second liquid return channel are provided and the first liquid return channel and the second liquid return channel are located on different parts of the enclosure, so that the two liquid return channels are configured to jointly convey the liquid in the first cavity to the second cavity. Firstly, after the powertrain is installed in a vehicle, when an environment of the vehicle changes, for example, when an inclination angle of the vehicle increases, two liquid return channels can ensure that the liquid in the first cavity is smoothly drained into the second cavity, and a level of the liquid in the first cavity remains below a preset liquid level, improving efficiency of the motor. Secondly, when the powertrain is installed in different vehicles, a position or an angle at which the powertrain is installed changes. In this case, providing of two liquid return channels can enhance adaptability of the powertrain and enable the powertrain to be flexibly disposed in vehicles. Thirdly, a production line test process corresponding to the powertrain is designed based on an angle at which the powertrain is disposed in a vehicle. With two liquid return channels provided, a liquid drainage requirement of the first cavity can be met. Therefore, one production line can be compatible with and adapt to a plurality of types of vehicles, reducing costs of test production lines. Fourthly, when the level of the liquid in the first cavity is high and the first liquid return channel and the second liquid return channel are both below the liquid level, the liquid in the first cavity is drained through both the two liquid return channels, and therefore the liquid in the first cavity can be drained more quickly. When one of the liquid return channels is blocked, the other liquid return channel can continue to work, preventing the liquid from accumulating in the first cavity, improving cooling effect, and ensuring heat dissipation performance of the powertrain.

After the powertrain is installed in a vehicle, if the vehicle is on a flat road and if the first liquid return channel is at a low point of the first cavity in a direction of gravity, the liquid in the first cavity is conveyed to the second cavity through the first liquid return channel. When the vehicle drives on an extreme slope and after the powertrain reaches a specific inclination angle, a height of the first liquid return channel in the direction of gravity increases, and the second liquid return channel is at a low point of the first cavity in the direction of gravity. In this case, the liquid in the first cavity is conveyed to the second cavity through the second liquid return channel. When a position of the powertrain changes, two liquid return channels can ensure that the liquid in the first cavity is smoothly conveyed to the second cavity. In addition, when the powertrain is installed in different types of vehicles, an installation angle changes. In this case, the providing of two liquid return channels can also enable the first cavity to meet the liquid drainage requirement, and enable the powertrain to adapt to different types of vehicles and meet requirements of flexible disposing. Accordingly, a production line of vehicles can also be compatible with and adapt to a plurality of types, reducing costs of test production lines.

In this application, the enclosure isolates the motor and a reducer from an external environment. On the one hand, the enclosure may be configured to protect the powertrain, to prevent the motor and the reducer from being damaged due to a collision with the external environment. On the other hand, the powertrain vibrates when being in use. With the enclosure disposed, vibration of the powertrain that is in use can be reduced, preventing the powertrain from causing damage to other parts in the vehicle, and reducing noise made by the powertrain. The separator separates the interior of the enclosure into the first cavity and the second cavity. The separator and the enclosure limit the motor to be in the first cavity. The motor can generate drive torque, and serve as a power source for the powertrain.

In a possible implementation, liquid in the first cavity and the second cavity is cooling lubricating oil. The cooling lubricating oil is used to cool the motor, to prevent the motor from being damaged due to an excessively high temperature and prevent a failure of the powertrain. In addition, the cooling lubricating oil may be used to lubricate the motor shaft, to prevent the motor shaft and other parts from being worn. In another implementation, liquid in the first cavity and the second cavity may alternatively be water, a water-oil mixture, or another medium. This is not specifically limited herein in this application. In an implementation, the powertrain further includes an oil pump and an oil cooler. The oil pump is configured to drive the cooling lubricating oil to circulate between the first cavity and the second cavity. When flowing through the motor, the cooling lubricating oil can take away heat that is generated when the motor operates. The cooling lubricating oil with a high temperature is cooled when passing through the oil cooler, and continues to be used to cool the motor.

The first liquid return channel and the second liquid return channel are both fastened to the enclosure and are located outside the first cavity and the second cavity. The first liquid return channel and the second liquid return channel have accommodating space inside for passing of liquid. The liquid in the first cavity flows into the second cavity through the first liquid return channel, or the liquid in the first cavity flows into the second cavity through the second liquid return channel, or the liquid in the first cavity flows into the second cavity through both the first liquid return channel and the second liquid return channel. When the powertrain is in use or the powertrain is installed in different vehicles, relative positions of the first liquid return channel and the second liquid return channel to the motor in the direction of gravity change. The direction of gravity is vertically downward. The direction of gravity is perpendicular to a horizontal direction.

In a possible implementation, in an initial state, when the powertrain is in a vertical position, the first liquid return channel is below the liquid level of the first cavity in the direction of gravity, and the second liquid return channel is above the liquid level of the first cavity in the direction of gravity. In this case, the liquid in the first cavity flows to the second cavity through the first liquid return channel. At a moment, the relative positions of the first liquid return channel and the second liquid return channel to the motor in the direction of gravity change. For example, when the powertrain is in a horizontal position, the first liquid return channel is above the liquid level of the first cavity in the direction of gravity, and the second liquid return channel is below the liquid level of the first cavity in the direction of gravity. In this case, the liquid in the first cavity flows to the second cavity through the second liquid return channel.

In a possible implementation, after the powertrain is installed in a vehicle, when the vehicle is on level ground, at least a part of the first liquid return channel and at least a part of the second liquid return channel are both below the liquid level of the first cavity. In this case, the liquid in the first cavity is drained into the second cavity through both the first liquid return channel and the second liquid return channel. When the vehicle drives uphill, a height of the second liquid return channel increases. When the second liquid return channel becomes above the liquid level of the first cavity and the first liquid return channel is still below the liquid level, the liquid in the first cavity is drained into the second cavity through the first liquid return channel. When the vehicle drives downhill, the height of the first liquid return channel increases. When the first liquid return channel becomes above the liquid level of the first cavity and the second liquid return channel is below the liquid level, the liquid in the first cavity is drained into the second cavity through the second liquid return channel.

In a possible implementation, the oil pump drives the liquid in the first cavity into a liquid return channel, and then drives the liquid in the liquid return channel into the second cavity. After the liquid is cooled by the oil cooler, the oil pump conveys the liquid to a high position in the first cavity in the direction of gravity. The liquid flows through the motor under gravity and flows down into a liquid return channel that is at a low part of the first cavity in the direction of gravity, and then continues to circulate. In another implementation, if a direction in which the liquid flows when being driven by the oil pump changes, the first liquid return channel and the second liquid return channel are configured to convey liquid in the second cavity to the first cavity. The oil pump drives the liquid in the second cavity to flow into a liquid return channel, and then drives the liquid in the liquid return channel into the first cavity.

In a possible implementation, the powertrain includes at least two liquid return channels. The at least two liquid return channels are all located on the outer side of the enclosure and communicate with the first cavity and the second cavity, and are configured to convey the liquid in the first cavity to the second cavity. The at least two liquid return channels at most partially overlap in the circumferential direction of the motor shaft.

In a possible implementation, the second liquid return channel and the first liquid return channel are spaced apart in the circumferential direction of the motor shaft. Based on positions of the second liquid return channel and the first liquid return channel in the direction of gravity, the liquid in the first cavity may choose to flow into a liquid return channel at a lower position. When an angle of the powertrain changes and when the powertrain reaches a specific inclination angle, the positions of the second liquid return channel and the first liquid return channel in the direction of gravity change. In this case, the liquid in the first cavity may flow into the other liquid return channel that is closer to the ground. When the powertrain is used in a vehicle, with the second liquid return channel and the first liquid return channel spaced apart, it can still be ensured that the liquid in the first cavity is smoothly drained away when the vehicle drives on a steep slope, enabling the vehicle to adapt to a steeper slope.

In a possible implementation, in an axial direction of the motor shaft, at least a part of the first liquid return channel and at least a part of the second liquid return channel are located on a side that is of the separator and that faces the first cavity. In an implementation, the first liquid return channel and the second liquid return channel are located on the side that is of the separator and that faces the first cavity, so that liquid at an end that is of the first cavity and that is away from the separator in the axial direction can flow into the second cavity through the first liquid return channel and the second liquid return channel. In an implementation, one of the first liquid return channel and the second liquid return channel is located on the side that is of the separator and that faces the first cavity, and for the other of the first liquid return channel and the second liquid return channel, the other part is located on the side that is of the separator and that faces the first cavity, and a part is located on a side that is of the separator and that faces the second cavity. In an implementation, for each of the first liquid return channel and the second liquid return channel, one part is located on the side that is of the separator and that faces the first cavity, and the other part is located on a side that is of the separator and that faces the second cavity. Positions of the first liquid return channel and the second liquid return channel may be determined based on a shape of the enclosure and providing of passages in the enclosure, provided that it can be ensured that the liquid in the first cavity is smoothly drained into the second cavity.

In a possible implementation, the first liquid return channel and/or the second liquid return channel extend/extends in the axial direction of the motor shaft. In an implementation, the first liquid return channel and the second liquid return channel both extend in the axial direction of the motor shaft. The first liquid return channel and the second liquid return channel are short. The liquid in the first cavity can flow into the second cavity after flowing for a short distance. Therefore, the liquid in the first cavity is drained efficiently. In an implementation, one of the first liquid return channel and the second liquid return channel extends in the axial direction of the motor shaft, and a direction in which the other of the first liquid return channel and the second liquid return channel extends intersects the axial direction of the motor shaft. In an implementation, directions in which the first liquid return channel and the second liquid return channel extend intersect the axial direction of the motor shaft.

In a possible implementation, in the circumferential direction of the motor shaft, an included angle between a first connecting line that is between the first liquid return channel and the motor shaft and a second connecting line that is between the second liquid return channel and the motor shaft is less than or equal to 90°; the first connecting line is a connecting line between a midpoint of the first liquid return channel in the circumferential direction of the motor shaft and the motor shaft in a radial direction of the motor shaft; and the second connecting line is a connecting line between a midpoint of the second liquid return channel in the circumferential direction of the motor shaft and the motor shaft in the radial direction of the motor shaft. When the included angle between the first connecting line and the second connecting line is less than or equal to 90°, the first cavity can meet a requirement of smoothly draining liquid, in both a case in which the powertrain is in the horizontal position and a case in which the powertrain is in the vertical position.

In a possible implementation, the motor includes a rotor, a highest point of the accommodating space inside at least one of the first liquid return channel and the second liquid return channel in the direction of gravity is lower than a lowest point of an outer surface of the rotor, and the lowest point of the outer surface of the rotor is a lowest point of the rotor in the direction of gravity that exists when the powertrain is in use. When a highest point of the accommodating space inside at least one of the first liquid return channel and the second liquid return channel in the direction of gravity is lower than the lowest point of the outer surface of the rotor, a highest position of the liquid level of the first cavity is equal to a highest point of a lower one of the first liquid return channel and the second liquid return channel. When the lower one of the first liquid return channel and the second liquid return channel fills with the liquid, the liquid flows into the second cavity, avoiding that the cooling liquid is in an air gap for a long time.

When the powertrain is in use, an angle of the powertrain changes. Regardless of the angle of the powertrain, the following is met: A highest point of the accommodating space inside at least one of the first liquid return channel and the second liquid return channel in the direction of gravity is lower than the lowest point of the outer surface of the rotor. Therefore, the liquid in the first cavity cannot fill the air gap. To be specific, the liquid in the first cavity cannot fill a part that is of the air gap and that is between the lowest point of the outer surface of the rotor and a lowest point of an inner surface of a stator, ensuring work efficiency and reliability of the motor.

In a possible implementation, the highest point of the accommodating space inside the first liquid return channel in the direction of gravity is lower than the lowest point of the outer surface of the rotor. To be specific, at any moment during use of the powertrain, the highest point of the accommodating space inside the first liquid return channel in the direction of gravity is lower than the lowest point of the outer surface of the rotor. When the first liquid return channel is fully or partially filled with the liquid, a level of the liquid in the first liquid return channel is lowe r than the lowest point of the outer surface of the rotor. Therefore, even if only one first liquid return channel is used, the liquid drainage requirement of the first cavity can be met, and it can be ensured that the liquid in the first cavity does not fill the air gap.

In a possible implementation, the highest point of the accommodating space inside the second liquid return channel in the direction of gravity is lower than the lowest point of the outer surface of the rotor. To be specific, at any moment during use of the powertrain, the highest point of the accommodating space inside the second liquid return channel in the direction of gravity is lower than the lowest point of the outer surface of the rotor. When the second liquid return channel is fully or partially filled with the liquid, a level of the liquid in the second liquid return channel is lower than the lowest point of the outer surface of the rotor. Therefore, even if only one second liquid return channel is used, the liquid drainage requirement of the first cavity can be met, and it can be ensured that the accumulating liquid in the first cavity cannot fill the air gap, ensuring work efficiency and reliability of the motor.

In a possible implementation, when the powertrain is in the vertical position, the highest point of the accommodating space inside the first liquid return channel in the direction of gravity is lower than the lowest point of the outer surface of the rotor. When the angle of the powertrain changes during use of the powertrain, for example, when the powertrain changes from the vertical position to the horizontal position, the highest point of the accommodating space inside the second liquid return channel in the direction of gravity is lower than the lowest point of the outer surface of the rotor. The two implementations can both meet requirements of cooling and liquid return, ensuring cooling and heat dissipation effect for the powertrain.

In a possible implementation, the highest point of the accommodating space inside at least one of the first liquid return channel and the second liquid return channel in the direction of gravity is lower than a lowest point of the air gap. To be specific, the highest point of the accommodating space inside at least one of the first liquid return channel and the second liquid return channel in the direction of gravity is lower than the lowest point of the inner surface of the stator. In this case, no liquid accumulates in the air gap, better ensuring work efficiency and reliability of the motor.

In an implementation, when the powertrain is used in a vehicle and the vehicle is on level ground, the powertrain is at an angle to the horizontal direction. In this case, lowest points of the accommodating space inside the first liquid return channel and the second liquid return channel in the direction of gravity are both lower than the lowest point of the outer surface of the rotor, the highest points of the accommodating space inside the first liquid return channel and the second liquid return channel in the direction of gravity may be higher than the lowest point of the outer surface of the rotor, and the liquid in the first cavity enters the second cavity through both the first liquid return channel and the second liquid return channel. When the vehicle drives on a slope: when the height of the second liquid return channel in the direction of gravity increases and the highest point of the accommodating space inside the first liquid return channel in the direction of gravity is lower than the lowest point of the outer surface of the rotor, the liquid in the first cavity can enter the second cavity through the first liquid return channel; and when the height of the first liquid return channel in the direction of gravity increases and the highest point of the accommodating space inside the second liquid return channel in the direction of gravity is lower than the lowest point of the outer surface of the rotor, the liquid in the first cavity can enter the second cavity through the second liquid return channel.

When the powertrain is disposed in a vehicle at any angle, for example, 0° to 90°, the liquid is returned through a combination of the first liquid return channel and the second liquid return channel when the vehicle drives on a flat road, and the liquid is returned through a combination of the two liquid return channels or through one separate liquid return channel when the vehicle drives uphill or downhill. This design enables the powertrain to make full use of the first liquid return channel and the second liquid return channel for liquid drainage. Therefore, the powertrain can be disposed in vehicles at angles that are in a wider range, enhancing adaptability of the powertrain.

In an implementation, when there is a large amount of liquid to be drained out of the first cavity and two liquid return channels are required to work simultaneously for liquid drainage, the highest points of the accommodating space inside the first liquid return channel and the second liquid return channel in the direction of gravity may be set to be both lower than the lowest point of the outer surface of the rotor.

In a possible implementation, the motor includes a rotor, a first liquid level of the first liquid return channel and a second liquid level of the second liquid return channel are lower than a lowest point of an outer surface of the rotor, and the lowest point of the outer surface of the rotor is a lowest point of the rotor in the direction of gravity that exists when the powertrain is in use.

When a drainage amount is designed for the first liquid return channel and the second liquid return channel based on a drainage amount required by the first cavity, the liquid does not fill the entire first liquid return channel or the entire second liquid return channel when the liquid is drained through both the first liquid return channel and the second liquid return channel. In this case, although highest points of the first liquid return channel and the second liquid return channel are higher than the lowest point of the outer surface of the rotor, the first liquid level of the first liquid return channel and the second liquid level of the second liquid return channel are lower than the lowest point of the outer surface of the rotor. Therefore, the liquid in the first cavity cannot fill the air gap either, ensuring work efficiency and reliability of the motor. When a positional relationship between the first liquid return channel and the second liquid return channel changes and the liquid is drained through only one liquid return channel, it is only necessary to ensure that a liquid level of a liquid return channel in use is lower than the lowest point of the outer surface of the rotor. In this way, the liquid in the first cavity cannot fill the air gap.

In a possible implementation, the powertrain further includes the reducer, the reducer is located in the second cavity, the reducer includes an output shaft, the output shaft is coupled to an end that is of the motor shaft and that is located in the second cavity, the output shaft and the motor shaft are disposed side by side in a first direction, the first liquid return channel is located between the output shaft and the motor shaft in the first direction, and the first direction intersects the axial direction of the motor shaft.

In an implementation, the output shaft and the motor shaft are disposed in parallel. In an implementation, when the first direction is parallel to the direction of gravity, the powertrain is in the vertical position, and when the first direction is perpendicular to the direction of gravity, the powertrain is in the horizontal position. In an implementation, when the powertrain is installed in a vehicle, the output shaft is located on a side that is of the motor shaft and that is close to the ground in the direction of gravity, and the height of the first liquid return channel in the direction of gravity is less than the height of the second liquid return channel in the direction of gravity.

In a possible implementation, the motor includes a first end face and a second end face that are provided in the axial direction, the first end face is provided further away from the separator than the second end face, a first liquid collection chamber is formed between the first end face and the enclosure, and the first liquid return channel and the second liquid return channel communicate with the first liquid collection chamber, and are configured to convey liquid in the first liquid collection chamber to the second cavity. Part of the liquid in the first cavity is collected into the first liquid collection chamber. The first liquid return channel and the second liquid return channel are provided, to drain the liquid in the first liquid collection chamber. In this way, the liquid in the first cavity can be drained together, increasing liquid drainage efficiency of the first cavity.

In a possible implementation, a part that is of the enclosure and that forms the first liquid collection chamber is provided with a first liquid outlet that runs through the enclosure, an end that is of the first liquid return channel and that is close to the first liquid collection chamber is provided with a first liquid inlet, the first liquid outlet communicates with the first liquid inlet, the liquid in the first liquid collection chamber flows through the first liquid outlet and the first liquid inlet sequentially and enters the first liquid return channel, and a size of the first liquid outlet is greater than or equal to a size of the first liquid inlet in the circumferential direction of the motor shaft. With the size of the first liquid outlet being set to be greater than or equal to the size of the first liquid inlet, the liquid in the first liquid collection chamber can be drained into the first liquid return channel more easily, preventing the liquid from accumulating in the first liquid collection chamber.

In a possible implementation, the part that is of the enclosure and that forms the first liquid collection chamber is provided with a second liquid outlet that runs through the enclosure, an end that is of the second liquid return channel and that is close to the first liquid collection chamber is provided with a second liquid inlet, and the second liquid outlet communicates with the second liquid inlet. The liquid in the first liquid collection chamber flows through the second liquid outlet and the second liquid inlet sequentially and enters the second liquid return channel, and a size of the second liquid outlet is greater than or equal to a size of the second liquid inlet in the circumferential direction of the motor shaft. With the size of the second liquid outlet being set to be greater than or equal to the size of the second liquid inlet, the liquid in the first liquid collection chamber can be drained into the second liquid return channel more easily, preventing the liquid from accumulating in the first liquid collection chamber. In an implementation, the size of the second liquid outlet may alternatively be less than the size of the second liquid inlet.

In a possible implementation, a second liquid collection chamber is formed between the second end face and the separator, the separator is provided with third liquid outlets that run through the separator, and the third liquid outlets communicate with the second liquid collection chamber and the second cavity, and are configured to convey liquid in the second liquid collection chamber to the second cavity.

Part of the liquid in the first cavity is collected into the first liquid collection chamber. With the third liquid outlets provided, the liquid in the second liquid collection chamber is directly drained into the second cavity. In this way, the liquid in the first cavity can be drained together, increasing liquid drainage efficiency of the first cavity.

In a possible implementation, an enclosure located on an outer side of the second cavity is provided with fourth liquid inlets that run through the enclosure, ends that are of the first liquid return channel and the second liquid return channel and that are close to the second cavity in the axial direction are provided with fourth liquid outlets, the fourth liquid inlets communicate with the fourth liquid outlets, and the liquid in the first liquid return channel and the second liquid return channel flows through the fourth liquid outlets and the fourth liquid inlets sequentially and enters the second cavity.

In a possible implementation, the separator is further provided with a fifth liquid inlet; the fifth liquid inlet communicates with the first cavity and the second cavity; the fifth liquid inlet is located in a high part of the separator in the direction of gravity; after being cooled, the liquid in the second cavity enters the first cavity through the fifth liquid inlet, and enters the air gap between the stator and the rotor through holes in a peripheral wall of the motor shaft; the liquid flows from a high position in the direction of gravity to a low position in the direction of gravity, to cool and lubricate the stator and the rotor in the first cavity; and from the low position in the direction of gravity, the liquid in the first cavity continues to flow into the second cavity through a liquid return channel.

In a possible implementation, the motor shaft is hollow. The liquid in the second cavity enters the first cavity through an interior of the motor shaft after being cooled, and is used to cool and lubricate the stator and the rotor in the first cavity.

In a possible implementation, in the circumferential direction of the motor shaft, at least some of the third liquid outlets overlap the first liquid return channel, and at least some of the third liquid outlets overlap the second liquid return channel; highest points of the third liquid outlets are lower than the lowest point of the outer surface of the rotor; and the lowest point of the outer surface of the rotor is the lowest point of the rotor in the direction of gravity that exists when the powertrain is in use.

The separator is provided with a plurality of third liquid outlets. Some of the third liquid outlets are provided close to the first liquid return channel. Projections that are obtained when the third liquid outlets are projected to the circumferential direction at least partially overlap a projection that is obtained when the first liquid return channel is projected to the circumferential direction. When the first liquid return channel is configured for draining the liquid in the first liquid collection chamber, the third liquid outlets are configured for draining the liquid in the second liquid collection chamber. Some of the third liquid outlets are provided close to the second liquid return channel. Projections that are obtained when the third liquid outlets are projected to the circumferential direction at least partially overlap a projection that is obtained when the second liquid return channel is projected to the circumferential direction. When the second liquid return channel is configured for draining the liquid in the first liquid collection chamber, the third liquid outlets are configured for draining the liquid in the second liquid collection chamber.

With the highest points of the third liquid outlets lower than the lowest point of the outer surface of the rotor, the liquid in the second liquid collection chamber cannot fill the air gap. To be specific, the liquid in the second liquid collection chamber cannot fill the part that is of the air gap and that is between the lowest point of the outer surface of the rotor and the lowest point of the inner surface of the stator, ensuring work efficiency and reliability of the motor.

In a possible implementation, the third liquid outlets are in a shape of a bar, and the third liquid outlets extend in the circumferential direction. With this design, an area of the third liquid outlet is increased, facilitating liquid drainage. In another implementation, the third liquid outlets may alternatively be round, oval, or square, or be in an irregular shape.

According to a second aspect, this application provides a vehicle. The vehicle includes a vehicle body and the powertrain according to any one of the foregoing implementations. The powertrain is installed in the vehicle body.

In a possible implementation, the powertrain further includes a reducer, the reducer is located in the second cavity, an output shaft of the reducer and the motor shaft are disposed in a first direction, an included angle between the first direction and a horizontal direction is a first included angle, and highest points of accommodating space inside the first liquid return channel and the second liquid return channel are determined based on the first included angle, so that a liquid level of one (or two) liquid return channel that is of the first liquid return channel and the second liquid return channel and in which there is liquid is lower than a lowest point of an outer surface of the rotor in the motor.

In a possible implementation, a steepest included angle at which the vehicle can climb a slope is a second included angle, and the highest points of the accommodating space inside the first liquid return channel and the second liquid return channel are determined based on the first included angle and the second included angle, so that a liquid level of one (or two) liquid return channel that is of the first liquid return channel and the second liquid return channel and in which there is liquid is lower than the lowest point of the outer surface of the rotor in the motor.

## BRIEF DESCRIPTION OF DRAWINGS

To describe technical solutions in embodiments of this application more clearly, the following describes accompanying drawings that need to be used in embodiments of this application.

FIG. 1 is a diagram of a vehicle according to this application;

FIG. 2 is a diagram of a structure of a powertrain according to this application;

FIG. 3 is a perspective view of a powertrain according to this application;

FIG. 4 is a diagram of a powertrain according to this application;

FIG. 5 is a diagram of a powertrain according to this application;

FIG. 6 is a perspective view of a powertrain according to this application;

FIG. 7 is a diagram of a powertrain according to this application;

FIG. 8 is a diagram of a powertrain according to this application;

FIG. 9 is a diagram of a powertrain according to this application;

FIG. 10 is a diagram of a powertrain according to this application;

FIG. 11 is a diagram of a powertrain according to this application;

FIG. 12 is a diagram of a powertrain according to this application;

FIG. 13 is a diagram of a powertrain according to this application;

FIG. 14 is a diagram of a powertrain according to this application;

FIG. 15 is a diagram of a powertrain according to this application;

FIG. 16 is a diagram of a powertrain according to this application; and

FIG. 17 is a diagram of a separator and liquid return channels according to this application.

**DESCRIPTION OF EMBODIMENTS**

The following describes the technical solutions in embodiments of this application with reference to the accompanying drawings in embodiments of this application. It is clear that the described embodiments are merely some rather than all of embodiments of this application.

Terms such as "first" and "second" in this specification are merely intended for a purpose of description, and shall not be understood as an indication or implication of relative importance or implicit indication of a quantity of indicated technical features. Therefore, a feature defined with "first" or "second" may explicitly or implicitly indicate that one or more such features are included. In the description of this application, "a plurality of means two or more unless otherwise specified.

In addition, in this specification, directional terms such as "up" and "down" are defined relative to positions in which structures are schematically placed in the accompanying drawings. It should be understood that these directional terms are relative concepts, are used to describe and clarify relativity, and may vary with positions in which structures are placed.

For ease of understanding, English abbreviations and related technical terms used in embodiments of this application are first explained and described below.

MCU: MCU is an abbreviation for motor control unit and represents a motor control unit.

This application provides a powertrain. The powertrain includes an enclosure, a separator, a motor, a first liquid return channel, and a second liquid return channel. The separator separates an interior of the enclosure into a first cavity and a second cavity. The motor is located in the first cavity, the motor includes a motor shaft, and the motor shaft extends into the second cavity through the separator. The first liquid return channel is located on an outer side of the enclosure and communicates with the first cavity and the second cavity, and is configured to convey liquid in the first cavity to the second cavity. The second liquid return channel is located on the outer side of the enclosure and communicates with the first cavity and the second cavity, and is configured to convey the liquid in the first cavity to the second cavity. The second liquid return channel and the first liquid return channel at most partially overlap in a circumferential direction of the motor shaft. In this application, with two liquid return channels provided, a liquid return requirement can be met when the powertrain is installed or disposed at any angle or used on a slope, improving adaptability and safety of the powertrain.

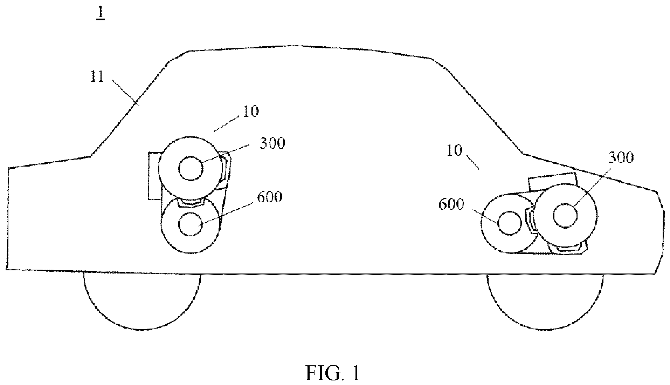

With reference to FIG. 1, this application provides a vehicle 1. A powertrain 10 provided in this application is used in the vehicle 1. The vehicle 1 includes a vehicle body. The powertrain 10 is installed in the vehicle body and configured to drive the vehicle body to move. The powertrain 10 is powertrain or powerplant in English. The powertrain 10 generates power and provides the vehicle 1 with power. The powertrain 10 includes a motor 300 and a reducer 600. The motor 300 is configured to generate power. The reducer 600 is connected to the motor 300 in a transmission manner. The reducer 600 is configured to reduce a rotational speed and increase torque.

In some implementations, the motor 300 includes an asynchronous motor and a synchronous motor. The synchronous motor includes a permanent magnet synchronous motor, a reluctance synchronous motor, and a hysteresis synchronous motor. The asynchronous motor includes an induction motor and an alternating current commutator motor. In some implementations, the induction motors may be classified into three-phase asynchronous motors, single-phase asynchronous motors, shaded pole asynchronous motors, and the like. In some implementations, the alternating current commutator motors may be classified into single-phase series motors, alternating current and direct current universal motors, and repulsion motors.

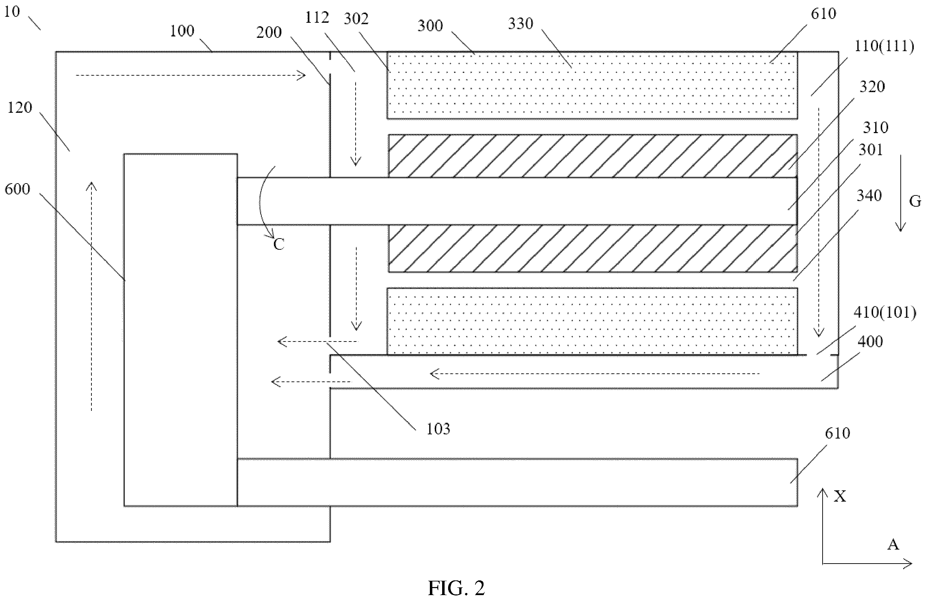

In this application, the motor 300 includes a motor shaft 310, a rotor 320, and a stator 330 (as shown in FIG. 2). The rotor 320 is sleeved on the motor shaft 310 and is fixed relative to the motor shaft 310. The stator 330 is sleeved on an outer peripheral side of the rotor 320. There is an air gap between the stator 330 and the rotor 320. The rotor 320 and the motor shaft 310 can rotate relative to the stator 330.

In some implementations, the reducer 600 includes a gear reducer (Gear reducer), a worm reducer (Worm wheel reducer), a worm gear reducer, a gear-worm reducer, a planetary gear reducer (Planetary gears), a cycloidal pinwheel reducer (Cycloid reducer), a harmonic gear reducer (Harmonic drive), and the like.

In some implementations, the powertrain 10 further includes a motor control unit (Motor Control Unit, MCU). The motor control unit, the motor 300, and the reducer 600 are integrated to reduce a volume. The motor control unit is configured to control at least one of the reducer 600, a power system of the vehicle, and a battery management system.

In an implementation, the vehicle 1 includes a plurality of powertrains 10 (as shown in FIG. 1). The plurality of powertrains 10 may be placed in the vehicle 1 in a same position or different positions.

The vehicle 1 includes a car, a robot, or other forms of devices that drive. The car includes an electric vehicle (Electric Vehicle, EV for short), a pure electric vehicle (Pure Electric Vehicle/Battery Electric Vehicle, PEV/BEV for short), a hybrid vehicle (Hybrid Electric Vehicle, HEV for short), a range extended electric vehicle (Range Extended Electric Vehicle, REEV for short), a plug-in hybrid vehicle (Plug-in Hybrid Electric Vehicle, PHEV for short), a new energy vehicle (New Energy Vehicle), and the like. In some implementations, the vehicle 1 includes a passenger car and various special-purpose vehicles with particular functions, such as an engineering rescue truck, a water sprinkler truck, a sewage suction truck, a concrete mixer truck, a crane, and a medical vehicle.

For example, as shown in FIG. 1, the vehicle 1 is a car. The vehicle 1 includes a vehicle body 11 and powertrains 10 that are installed in the vehicle body 11. The vehicle 1 further includes wheels. Output ends of reducers in the powertrains 10 are connected to the wheels in a transmission manner, and configured to drive the wheels to rotate, so as to drive the vehicle 1 to move.

The following describes the powertrain in this application in detail.

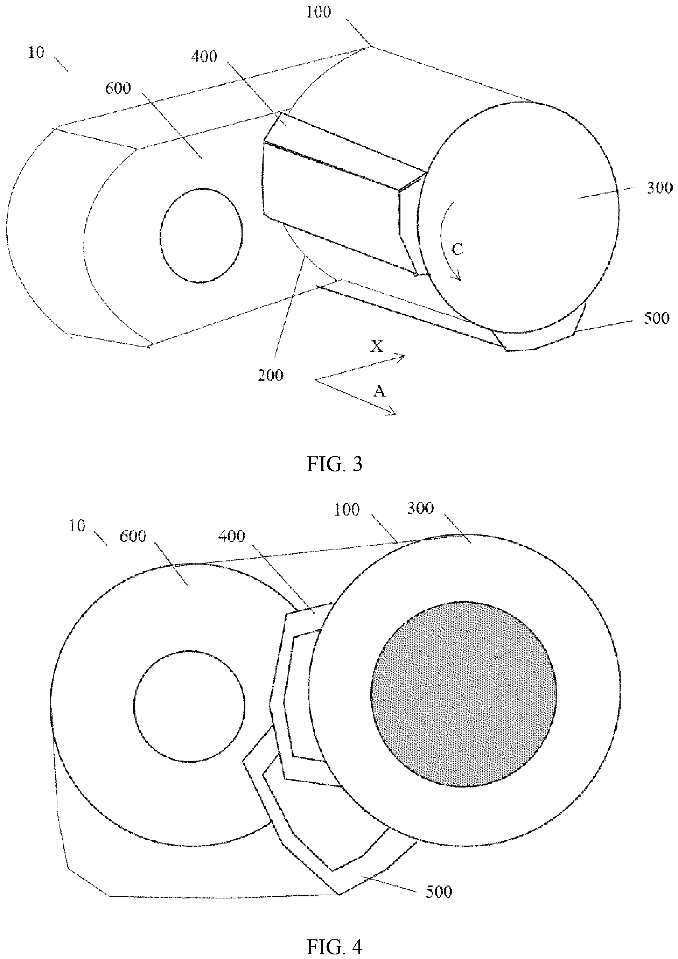

FIG. 2 is a diagram of a structure of a powertrain 10 according to this application. FIG. 3 is a perspective view of a powertrain 10 according to this application. The powertrain 10 includes an enclosure 100, a separator 200, a motor 300, a first liquid return channel 400, and a second liquid return channel 500. The separator 200 separates an interior of the enclosure 100 into a first cavity 110 and a second cavity 120 (as shown in FIG. 2). The motor 300 is located in the first cavity 110, the motor 300 includes a motor shaft 310, and the motor shaft 310 extends into the second cavity 120 through the separator 200. The first liquid return channel 400 is located on an outer side of the enclosure 100 and communicates with the first cavity 110 and the second cavity 120, and is configured to convey liquid in the first cavity 110 to the second cavity 120. The second liquid return channel 500 is located on the outer side of the enclosure 100 and communicates with the first cavity 110 and the second cavity 120, and is configured to convey the liquid in the first cavity 110 to the second cavity 120. The second liquid return channel 500 and the first liquid return channel 400 at most partially overlap in a circumferential direction C of the motor shaft 310.

The enclosure 100 isolates the motor 300 and a reducer 600 from an external environment. On the one hand, the enclosure 100 may be configured to protect the powertrain 10, to prevent the motor 300 and the reducer 600 from being damaged due to a collision with the external environment. On the other hand, the powertrain 10 vibrates when being in use. With the enclosure 100 disposed, vibration of the powertrain 10 that is in use can be reduced, preventing the powertrain 10 from causing damage to other parts in a vehicle 1, and reducing noise made by the powertrain 10.

The separator 200 separates the interior of the enclosure 100 into the first cavity 110 and the second cavity 120. The separator 200 and the enclosure 100 limit the motor 300 to be in the first cavity 110. The motor 300 is an electromagnetic apparatus that converts or transfers electrical energy according to the law of electromagnetic induction. The motor can generate drive torque, and serve as a power source for the powertrain 10. When the powertrain 10 is used in an electric vehicle, the motor 300 converts electrical energy into kinetic energy when operating, driving wheels of the electric vehicle to rotate so that the electric vehicle can move.

The motor 300 generates heat when operating, resulting in an increase in a temperature of the motor 300. High temperatures affect performance of the motor 300. If heat is not dissipated for the motor 300 in a timely manner, the motor 300 is damaged due to an excessively high temperature, reducing work efficiency of the powertrain 10. In addition, when the motor 300 operates, the motor shaft 310 rotates, and the motor shaft 310 and parts coupled to the motor shaft 310 are worn. For example, if bearings and gears in the powertrain 10 are severely worn, it is likely that the motor 300 cannot operate properly.

In an implementation, liquid in the first cavity 110 and the second cavity 120 is cooling lubricating oil. The cooling lubricating oil is used to cool the motor 300, to prevent the motor 300 from being damaged due to an excessively high temperature and prevent a failure of the powertrain 10. In addition, the cooling lubricating oil may be used to lubricate the motor shaft 310, to prevent the motor shaft 310 and other parts from being worn. In another implementation, liquid in the first cavity 110 and the second cavity 120 may alternatively be water, a water-oil mixture, or another medium. This is not specifically limited herein in this application. In an implementation, the powertrain 10 further includes an oil pump and an oil cooler (not shown in the figures). The oil pump is configured to drive the cooling lubricating oil to circulate between the first cavity 110 and the second cavity 120. When flowing through the motor 300, the cooling lubricating oil can take away heat that is generated when the motor 300 operates. The cooling lubricating oil with a high temperature is cooled when passing through the oil cooler, and continues to be used to cool the motor 300.

The first liquid return channel 400 and the second liquid return channel 500 are both fastened to the enclosure 100 and are located outside the first cavity 110 and the second cavity 120. The first liquid return channel 400 and the second liquid return channel 500 have accommodating space inside for passing of liquid. The liquid in the first cavity 110 flows into the second cavity 120 through the first liquid return channel 400, or the liquid in the first cavity 110 flows into the second cavity 120 through the second liquid return channel 500, or the liquid in the first cavity 110 flows into the second cavity 120 through both the first liquid return channel 400 and the second liquid return channel 500. When the powertrain 10 is in use or the powertrain 10 is installed in different vehicles 1, relative positions of the first liquid return channel 400 and the second liquid return channel 500 to the motor 300 in a direction of gravity G change. The direction of gravity G is vertically downward. The direction of gravity G is perpendicular to a horizontal direction.

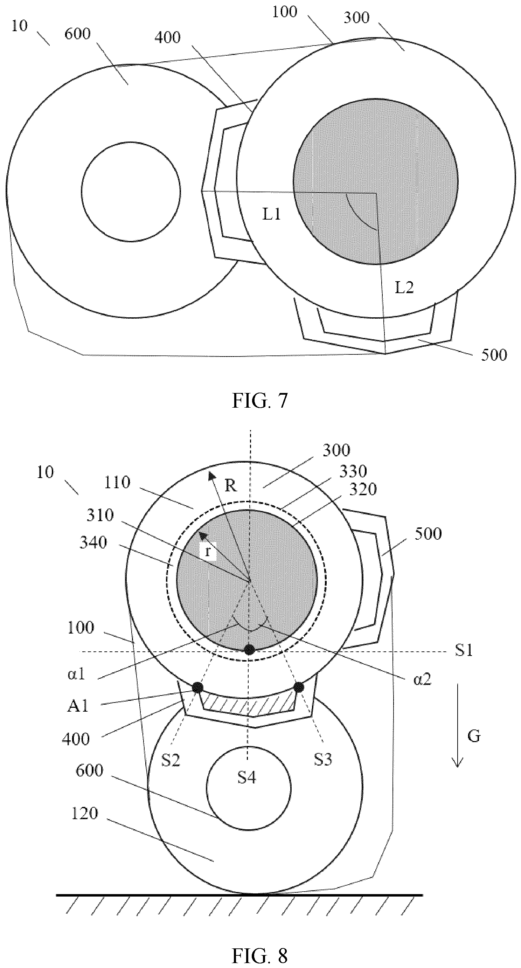

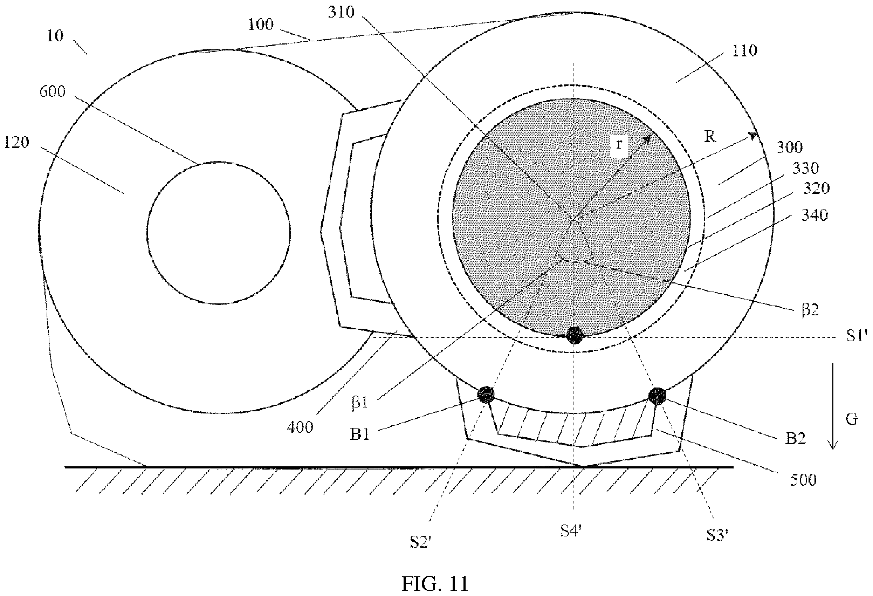

In an implementation, in an initial state, when the powertrain 10 is in a vertical position (as shown in FIG. 8), the first liquid return channel 400 is below a liquid level of the first cavity 110 in the direction of gravity G, and the second liquid return channel 500 is above the liquid level of the first cavity 110 in the direction of gravity G. In this case, the liquid in the first cavity 110 flows to the second cavity 120 through the first liquid return channel 400. At a moment, the relative positions of the first liquid return channel 400 and the second liquid return channel 500 to the motor 300 in the direction of gravity G change. For example, when the powertrain 10 is in a horizontal position (as shown in FIG. 11), the first liquid return channel 400 is above the liquid level of the first cavity 110 in the direction of gravity G, and the second liquid return channel 500 is below the liquid level of the first cavity 110 in the direction of gravity G. In this case, the liquid in the first cavity 110 flows to the second cavity 120 through the second liquid return channel 500.

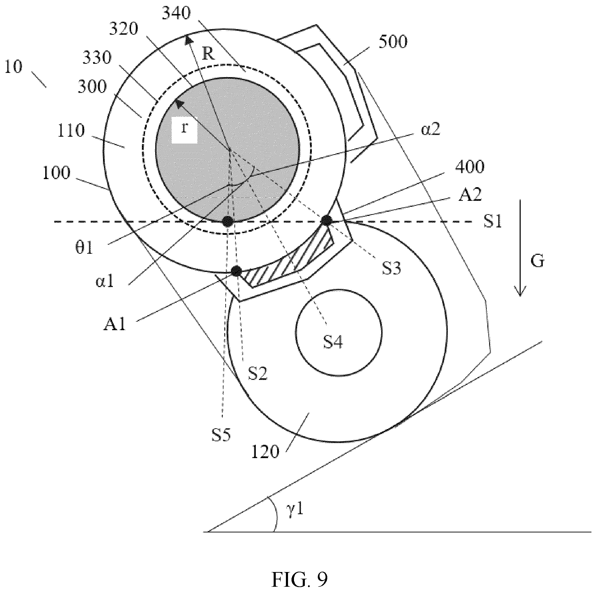

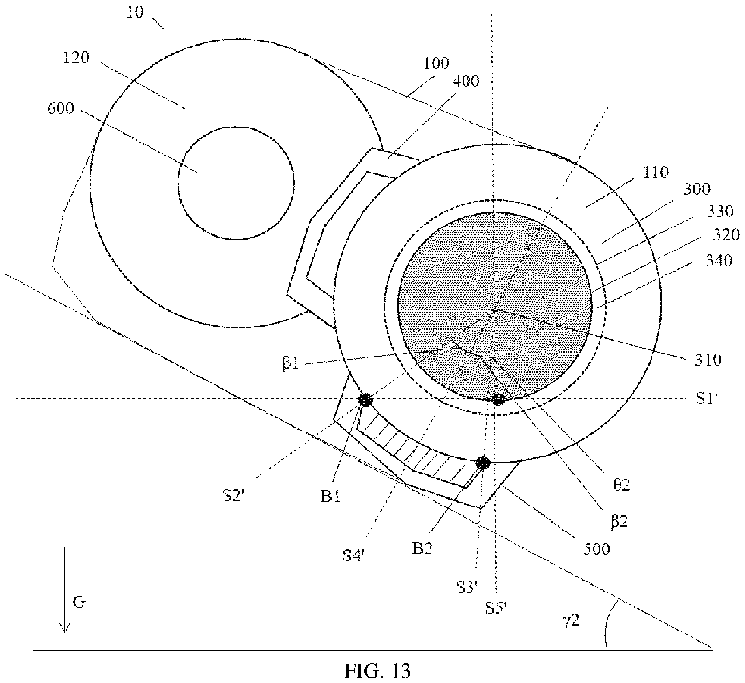

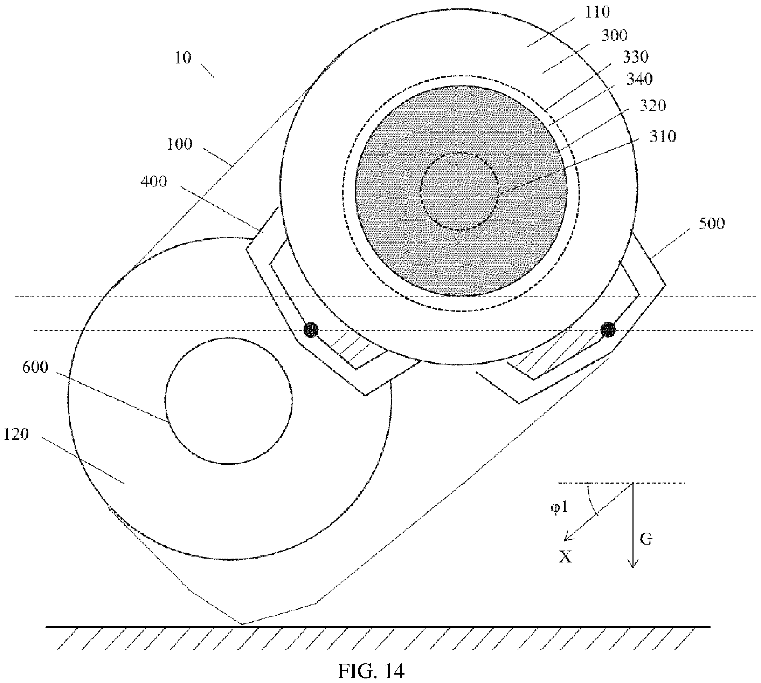

In an implementation, after the powertrain 10 is installed in a vehicle 1, when the vehicle 1 is on level ground, at least a part of the first liquid return channel 400 and at least a part of the second liquid return channel 500 are both below the liquid level of the first cavity 110 (as shown in FIG. 14). In this case, the liquid in the first cavity 110 is drained into the second cavity 120 through both the first liquid return channel 400 and the second liquid return channel 500. When the vehicle 1 drives uphill, a height of the second liquid return channel 500 increases. When the second liquid return channel 500 becomes above the liquid level of the first cavity 110 and the first liquid return channel 400 is still below the liquid level (as shown in FIG. 9), the liquid in the first cavity 110 is drained into the second cavity 120 through the first liquid return channel 400. When the vehicle 1 drives downhill, a height of the first liquid return channel 400 increases. When the first liquid return channel 400 becomes above the liquid level of the first cavity 110 and the second liquid return channel 500 is below the liquid level (as shown in FIG. 13), the liquid in the first cavity 110 is drained into the second cavity 120 through the second liquid return channel 500.

In this implementation, a direction in which the liquid flows is indicated by dashed-line arrows in FIG. 2. The oil pump drives the liquid in the first cavity 110 into a liquid return channel, and then drives the liquid in the liquid return channel into the second cavity 120. After the liquid is cooled by the oil cooler, the oil pump conveys the liquid to a high position in the first cavity 110 in the direction of gravity G. The liquid flows through the motor 300 under gravity and flows down into a liquid return channel that is at a low part of the first cavity 110 in the direction of gravity G, and then continues to circulate. In another implementation, if a direction in which the liquid flows when being driven by the oil pump changes, the first liquid return channel 400 and the second liquid return channel 500 are configured to convey liquid in the second cavity 120 to the first cavity 110. The oil pump drives the liquid in the second cavity 120 to flow into a liquid return channel, and then drives the liquid in the liquid return channel into the first cavity 110.

In an implementation, the powertrain 10 includes at least two liquid return channels. The at least two liquid return channels are all located on the outer side of the enclosure 100 and communicate with the first cavity 110 and the second cavity 120, and are configured to convey the liquid in the first cavity 110 to the second cavity 120. The at least two liquid return channels at most partially overlap in the circumferential direction C of the motor shaft 310.

In an implementation, the second liquid return channel 500 and the first liquid return channel 400 do not overlap in the circumferential direction C of the motor shaft 310 (as shown in FIG. 3). To be specific, the second liquid return channel 500 and the first liquid return channel 400 are spaced apart in the circumferential direction C, and the first liquid return channel 400 and the second liquid return channel 500 are not in direct contact. In an implementation, the second liquid return channel 500 and the first liquid return channel 400 partially overlap in the circumferential direction C of the motor shaft 310 (as shown in FIG. 4). To be specific, a part of the second liquid return channel 500 is fastened to the enclosure 100 and a part of the second liquid return channel 500 is fastened to the first liquid return channel 400, or a part of the first liquid return channel 400 is fastened to the enclosure 100 and a part of the first liquid return channel 400 is fastened to the second liquid return channel 500. The first liquid return channel 400 and the second liquid return channel 500 are in direct contact. However, in this application, the first liquid return channel 400 and the second liquid return channel 500 at most partially overlap in the circumferential direction C of the motor shaft 310, and are not allowed to completely overlap. If the first liquid return channel 400 and the second liquid return channel 500 completely overlap in the circumferential direction C of the motor shaft 310, liquid levels of the first liquid return channel 400 and the second liquid return channel 500 are always the same regardless of an included angle at which the powertrain 10 is to a horizontal plane. When the liquid levels of the first liquid return channel 400 and the second liquid return channel 500 are the same, the two liquid return channels are equivalent to one liquid return channel, failing to implement that the powertrain 10 uses different liquid return channels to convey the cooling liquid when being at different angles.

If only one liquid return channel is provided, a position of the liquid return channel in the direction of gravity G changes when a position of the powertrain 10 changes during use of the powertrain 10, or when an angle at which the powertrain 10 is installed changes in a case in which the powertrain 10 is installed in different vehicles 1. When the liquid return channel is higher than the liquid level of the first cavity 110, the liquid in the first cavity 110 cannot be drained into the second cavity 120 through the liquid return channel and accumulates in the first cavity 110. As a result, an amount of liquid participating in cooling circulation decreases, reducing cooling effect. Alternatively, when a highest point of the liquid return channel is higher than a preset liquid level of the first cavity 110, the level of the liquid in the first cavity 110 is higher than the preset liquid level, failing to meet a performance requirement of the powertrain 10, affecting efficiency of the powertrain 10, and even damaging the powertrain 10. The preset liquid level is a level that is of the cooling liquid in the first cavity 110 and that can ensure proper operation of the motor 300. For example, the preset liquid level is the same as a height of a lowest point of an air gap 340 in the direction of gravity.

If only one liquid return channel is provided, a production line test process for the powertrain 10 also needs to be designed based on an angle at which the powertrain 10 is disposed in a vehicle. If the powertrain 10 is to be installed in different types of vehicles 1, to test whether an oil return requirement of the cooling liquid is met when the powertrain 10 is installed in different vehicles 1, different production line test scenarios need to be set up. When the powertrain 10 is used in a large quantity of types of vehicles, a large quantity of corresponding production line test scenarios need to be set up, increasing test costs and making the test process complex.

However, in this application, the first liquid return channel 400 and the second liquid return channel 500 are provided and the first liquid return channel 400 and the second liquid return channel 500 are located on different parts of the enclosure 100, so that the two liquid return channels are configured to jointly convey the liquid in the first cavity 110 to the second cavity 120. Firstly, after the powertrain 10 is installed in a vehicle 1, when an environment in which the vehicle 1 is changes, for example, when an inclination angle at which the vehicle 1 is increases, two liquid return channels can ensure that the liquid in the first cavity 110 is smoothly drained into the second cavity 120, and the level of the liquid in the first cavity 110 remains below the preset liquid level, improving efficiency of the motor 300. Secondly, when the powertrain 10 is installed in different vehicles 1, a position or an angle at which the powertrain 10 is installed changes. In this case, providing of two liquid return channels can enhance adaptability of the powertrain 10 and enable the powertrain 10 to be flexibly disposed in vehicles 1. Thirdly, a production line test process corresponding to the powertrain 10 is designed based on an angle at which the powertrain 10 is disposed in a vehicle 1. With two liquid return channels provided, a liquid drainage requirement of the first cavity 110 can be met. Therefore, one production line can be compatible with and adapt to a plurality of types of vehicles 1, reducing costs of test production lines. Fourthly, when the level of the liquid in the first cavity 110 is high and the first liquid return channel 400 and the second liquid return channel 500 are both below the liquid level, the liquid in the first cavity 110 is drained through both the two liquid return channels, and therefore the liquid in the first cavity 110 can be drained more quickly. When one of the liquid return channels is blocked, the other liquid return channel can continue to work, preventing the liquid from accumulating in the first cavity 110, improving cooling effect, and ensuring heat dissipation performance of the powertrain 10.

After the powertrain 10 is installed in a vehicle 1, if the vehicle 1 is on a flat road and if the first liquid return channel 400 is at a low point of the first cavity 110 in the direction of gravity G, the liquid in the first cavity 110 is conveyed to the second cavity 120 through the first liquid return channel 400. When the vehicle 1 drives on an extreme slope and after the powertrain 10 reaches a specific inclination angle, the height of the first liquid return channel 400 in the direction of gravity G increases, and the second liquid return channel 500 is at a low point of the first cavity 110 in the direction of gravity G. In this case, the liquid in the first cavity 110 is conveyed to the second cavity 120 through the second liquid return channel 500. When a position of the powertrain 10 changes, two liquid return channels can ensure that the liquid in the first cavity 110 is smoothly conveyed to the second cavity 120. In addition, when the powertrain 10 is installed in different types of vehicles, an installation angle changes. In this case, the providing of two liquid return channels can also enable the first cavity 110 to meet the liquid drainage requirement, and enable the powertrain 10 to adapt to different types of vehicles and meet requirements of flexible disposing. Accordingly, a production line of vehicles 1 can also be compatible with and adapt to a plurality of types, reducing costs of test production lines.

In a possible implementation, the second liquid return channel 500 and the first liquid return channel 400 are spaced apart in the circumferential direction C of the motor shaft 310 (as shown in FIG. 3). The second liquid return channel 500 is not in contact with the first liquid return channel 400, and the two liquid return channels both communicate with the first cavity 110. Based on positions of the second liquid return channel 500 and the first liquid return channel 400 in the direction of gravity G, the liquid in the first cavity 110 may choose to flow into a liquid return channel at a lower position. When an angle of the powertrain 10 changes and when the powertrain 10 reaches a specific inclination angle, the positions of the second liquid return channel 500 and the first liquid return channel 400 in the direction of gravity G change. In this case, the liquid in the first cavity 110 may flow into the other liquid return channel that is closer to the ground. When the powertrain 10 is used in a vehicle 1, with the second liquid return channel 500 and the first liquid return channel 400 spaced apart, it can still be ensured that the liquid in the first cavity 110 is smoothly drained away when the vehicle 1 drives on a steep slope, enabling the vehicle 1 to adapt to a steeper slope.

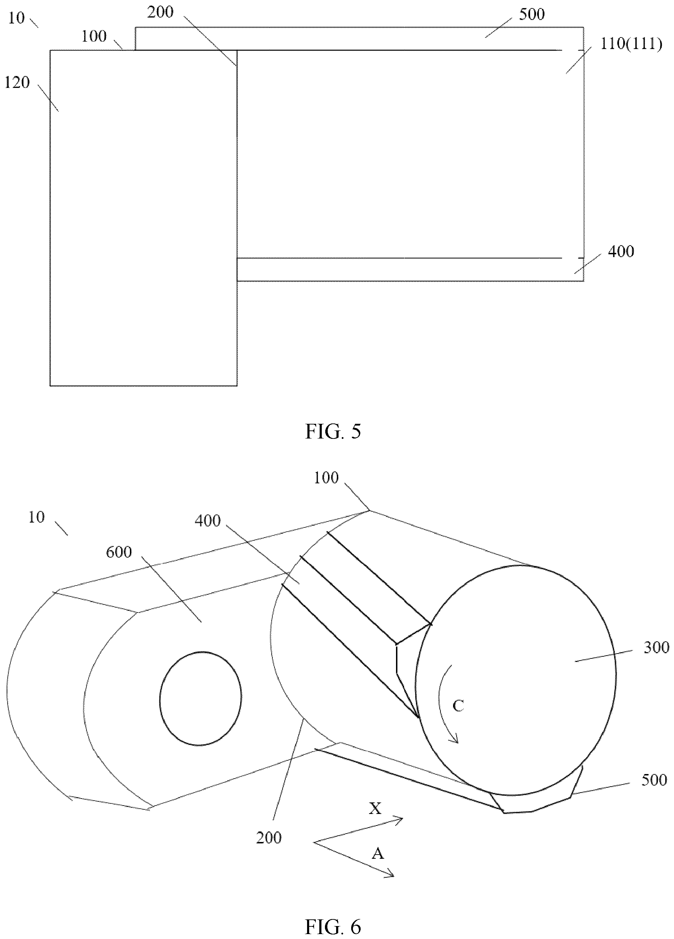

In a possible implementation, in an axial direction A of the motor shaft 310, at least a part of the first liquid return channel 400 and at least a part of the second liquid return channel 500 are located on a side that is of the separator 200 and that faces the first cavity 110. In an implementation, the first liquid return channel 400 and the second liquid return channel 500 are located on the side that is of the separator 200 and that faces the first cavity 110 (as shown in FIG. 3), so that liquid at an end that is of the first cavity 110 and that is away from the separator 200 in the axial direction A can flow into the second cavity 120 through the first liquid return channel 400 and the second liquid return channel 500. In an implementation, one of the first liquid return channel 400 and the second liquid return channel 500 is located on the side that is of the separator 200 and that faces the first cavity 110, and for the other of the first liquid return channel 400 and the second liquid return channel 500, a part is located on the side that is of the separator 200 and that faces the first cavity 110, and the other part is located on a side that is of the separator 200 and that faces the second cavity 120 (as shown in FIG. 5). In an implementation, for each of the first liquid return channel 400 and the second liquid return channel 500, one part is located on the side that is of the separator 200 and that faces the first cavity 110, and the other part is located on a side that is of the separator 200 and that faces the second cavity 120. Positions of the first liquid return channel 400 and the second liquid return channel 500 may be determined based on a shape of the enclosure 100 and providing of passages in the enclosure 100, provided that it can be ensured that the liquid in the first cavity 110 is smoothly drained into the second cavity 120.

In a possible implementation, the first liquid return channel 400 and/or the second liquid return channel 500 extend/extends in the axial direction A of the motor shaft 310. In an implementation, the first liquid return channel 400 and the second liquid return channel 500 both extend in the axial direction A of the motor shaft 310 (as shown in FIG. 3). The first liquid return channel 400 and the second liquid return channel 500 are short. The liquid in the first cavity 110 can flow into the second cavity 120 after flowing for a short distance. Therefore, the liquid in the first cavity 110 is drained efficiently. In an implementation, one of the first liquid return channel 400 and the second liquid return channel 500 extends in the axial direction A of the motor shaft 310, and a direction in which the other of the first liquid return channel 400 and the second liquid return channel 500 extends intersects the axial direction A of the motor shaft 310 (as shown in FIG. 6). In an implementation, directions in which the first liquid return channel 400 and the second liquid return channel 500 extend intersect the axial direction A of the motor shaft 310. In some implementations, an overall shape of at least one of the first liquid return channel 400 and the second liquid return channel 500 may be a curve, an arc, a bent line, or the like.

In a possible implementation, in the circumferential direction C of the motor shaft 310, an included angle between a first connecting line L1 that is between the first liquid return channel 400 and the motor shaft 310 and a second connecting line L2 that is between the second liquid return channel 500 and the motor shaft 310 is less than or equal to 90° (as shown in FIG. 7); the first connecting line L1 is a connecting line between a midpoint of the first liquid return channel 400 in the circumferential direction C of the motor shaft 310 and the motor shaft 310 in a radial direction of the motor shaft 310; and the second connecting line L2 is a connecting line between a midpoint of the second liquid return channel 500 in the circumferential direction C and the motor shaft 310 in the radial direction of the motor shaft 310. When the included angle between the first connecting line L1 and the second connecting line L2 is less than or equal to 90°, the first cavity 110 can meet a requirement of smoothly draining liquid, in both a case in which the powertrain 10 is in the horizontal position and a case in which the powertrain 10 is in the vertical position.

In an implementation, the included angle between the first connecting line L1 and the second connecting line L2 may alternatively be greater than 90° and less than or equal to 180°.

In a possible implementation, the motor 300 includes a rotor 320, a highest point of the accommodating space inside at least one of the first liquid return channel 400 and the second liquid return channel 500 in the direction of gravity G is lower than a lowest point of an outer surface of the rotor 320, and the lowest point of the outer surface of the rotor 320 is a lowest point of the rotor 320 in the direction of gravity G that exists when the powertrain 10 is in use. In this implementation, the motor 300 further includes a stator 330 that is sleeved on an outer side of the rotor 320 (as shown in FIG. 2 and FIG. 8). The rotor 320 is fastened to the motor shaft 310. A gap between the outer surface of the rotor 320 and an inner surface of the stator 330 is the air gap 340. If the cooling liquid, for example, cooling oil, is in the air gap 340 for a long time, efficiency of the motor 300 is reduced and the motor 300 is damaged. Because the first liquid return channel 400 and the second liquid return channel 500 both communicate with the first cavity 110, the cooling liquid flows in the first liquid return channel 400, the second liquid return channel 500, and the first cavity 110. When a highest point of the accommodating space inside at least one of the first liquid return channel 400 and the second liquid return channel 500 is lower than the lowest point of the outer surface of the rotor 320, a highest position of the liquid level of the first cavity 110 is equal to a highest point of a lower one of the first liquid return channel 400 and the second liquid return channel 500. When the lower one of the first liquid return channel 400 and the second liquid return channel 500 fills with the liquid, the liquid flows into the second cavity 120, avoiding that the cooling liquid is in the air gap 340 for a long time.

When the powertrain 10 is in use, an angle at which the powertrain 10 is changes. Regardless of the angle at which the powertrain 10 is, the following is met: A highest point of the accommodating space inside at least one of the first liquid return channel 400 and the second liquid return channel 500 is lower than the lowest point of the outer surface of the rotor 320. Therefore, the liquid in the first cavity 110 cannot fill the air gap 340. To be specific, the liquid in the first cavity 110 cannot fill a part that is of the air gap 340 and that is between the lowest point of the outer surface of the rotor 320 and a lowest point of the inner surface of the stator 330, ensuring work efficiency and reliability of the motor 300.

In an implementation, the highest point of the accommodating space inside the first liquid return channel 400 in the direction of gravity G is lower than the lowest point of the outer surface of the rotor 320 (as shown in FIG. 8, FIG. 9, and FIG. 10). To be specific, at any moment during use of the powertrain 10, the highest point of the accommodating space inside the first liquid return channel 400 is lower than the lowest point of the outer surface of the rotor 320. When the first liquid return channel 400 is fully or partially filled with the liquid, the level of the liquid in the first liquid return channel 400 is lower than the lowest point of the outer surface of the rotor 320. Therefore, even if only one first liquid return channel 400 is used, the liquid drainage requirement of the first cavity 110 can be met, and it can be ensured that the liquid in the first cavity 110 does not fill the air gap 340.

In an implementation, the highest point of the accommodating space inside the second liquid return channel 500 in the direction of gravity G is lower than the lowest point of the outer surface of the rotor 320 (as shown in FIG. 11, FIG. 12, and FIG. 13). To be specific, at any moment during use of the powertrain 10, the highest point of the accommodating space inside the second liquid return channel 500 is lower than the lowest point of the outer surface of the rotor 320. When the second liquid return channel 500 is fully or partially filled with the liquid, the level of the liquid in the second liquid return channel 500 is lower than the lowest point of the outer surface of the rotor 320. Therefore, even if only one second liquid return channel 500 is used, the liquid drainage requirement of the first cavity 110 can be met, and it can be ensured that the accumulating liquid in the first cavity 110 cannot fill the air gap 340, ensuring work efficiency and reliability of the motor 300.

In an implementation, when the powertrain 10 is in the vertical position (as shown in FIG. 8), the highest point of the accommodating space inside the first liquid return channel 400 in the direction of gravity G is lower than the lowest point of the outer surface of the rotor 320. When the angle at which the powertrain 10 is changes during use of the powertrain 10, for example, when the powertrain 10 changes from the vertical position to the horizontal position (as shown in FIG. 11), the highest point of the accommodating space inside the second liquid return channel 500 is lower than the lowest point of the outer surface of the rotor 320. The two implementations can both meet requirements of cooling and liquid return, ensuring cooling and heat dissipation effect for the powertrain 10.

In an implementation, the highest point of the accommodating space inside at least one of the first liquid return channel 400 and the second liquid return channel 500 in the direction of gravity G is lower than the lowest point of the air gap 340. To be specific, the highest point of the accommodating space inside at least one of the first liquid return channel 400 and the second liquid return channel 500 is lower than the lowest point of the inner surface of the stator 330. In this case, no liquid accumulates in the air gap 340, better ensuring work efficiency and reliability of the motor 300.

In an implementation, when the powertrain 10 is used in a vehicle 1 and the vehicle 1 is on level ground, the powertrain 10 is in the vertical position (as shown in FIG. 8). In this case, the height of the first liquid return channel 400 in the direction of gravity G is less than the height of the second liquid return channel 500 in the direction of gravity G, a lowest point of the accommodating space inside the second liquid return channel 500 in the direction of gravity G is higher than the lowest point of the outer surface of the rotor 320, and the liquid in the first cavity 110 enters the second cavity 120 through the first liquid return channel 400. Endpoints at two ends of the accommodating space inside the first liquid return channel 400 in the circumferential direction C are A1 and A2, respectively. A straight line that passes through the lowest point of the outer surface of the rotor 320 and that is in the horizontal direction is a first straight line S1. A1 and A2 are both lower than the first straight line S1. A connecting line between a center of the motor shaft 310 and A1 is a second straight line S2. A connecting line between the center of the motor shaft 310 and A2 is a third straight line S3. A straight line that passes through the center of the motor shaft 310 and that is perpendicular to the ground is a fourth straight line S4. An included angle between the second straight line S2 and the fourth straight line S4 is $\alpha$1. An included angle between the third straight line S3 and the fourth straight line S4 is $\alpha$2.

When the vehicle 1 is on a slope and A2 is higher than A1 (as shown in FIG. 9), an inclination angle of the slope, that is, an included angle between the slope and the horizontal direction, is $\gamma$1. In this case, the fourth straight line S4 is a straight line that passes through the center of the motor shaft 310 and that is perpendicular to the slope. A straight line that passes through the center of the motor shaft 310 and that is perpendicular to the horizontal direction is a fifth straight line S5. An included angle between the fifth straight line S5 and the second straight line S2 is $\theta$1. In this case, to meet that A2 is lower than the lowest point of the outer surface of the rotor 320, that is, A2 is lower than or as high as the first straight line S1, the following needs to be satisfied:

$$\theta1+\alpha1+\alpha2\leq\arccos(r/R)$$

In the foregoing, R is a radius of the enclosure 100 that is located on an outer side of the first cavity 110, r is a radius of the rotor 320, and a result of $\theta1+\alpha1+\alpha2$ is an included angle between the fifth straight line S5 and the third straight line S3.

Because $\theta1+\alpha1=\gamma1$,

$$\alpha2\leq\arccos(r/R)-\gamma1.$$

A result of $\theta1+\alpha1$ is an included angle between the fifth straight line S5 and the fourth straight line S4.

When $\gamma$1 is a maximum inclination angle when the vehicle 1 drives uphill/downhill, and $\alpha$2 takes a maximum value arccos(r/R)-$\gamma$1, a highest position of A2 on the enclosure 100 can be determined. In some implementations, a specific position of A2 may be selected based on a drainage amount of the first liquid return channel 400. If an excessively large amount of liquid is returned when the position of A2 corresponding to the maximum value of $\alpha$2 is selected, a lower position of A2 corresponding to a smaller $\alpha$2 may be selected.

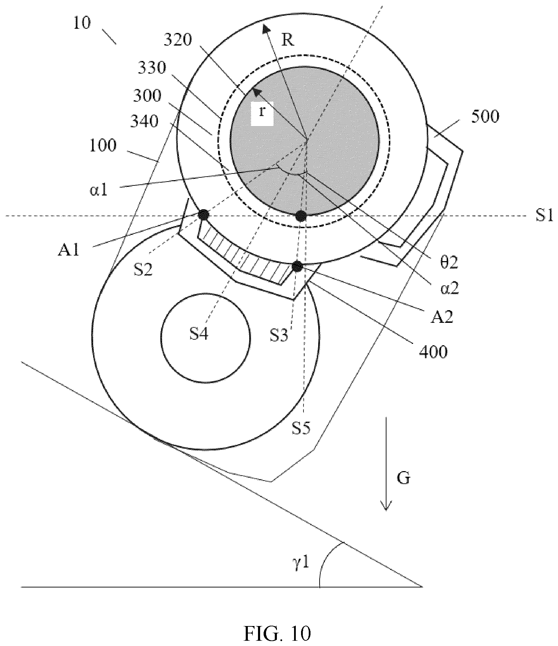

Likewise, when the vehicle 1 is on a slope and A1 is higher than A2 (as shown in FIG. 10), an inclination angle of the slope, that is, an included angle between the slope and the horizontal direction, is $\gamma$1. In this case, the fourth straight line S4 is a straight line that passes through the center of the motor shaft 310 and that is perpendicular to the slope. A straight line that passes through the center of the motor shaft 310 and that is perpendicular to the horizontal direction is a fifth straight line S5. An included angle between the fifth straight line S5 and the third straight line S3 is $\theta$2. In this case, to meet that A1 is lower than the lowest point of the outer surface of the rotor 320, that is, A1 is lower than or as high as the first straight line S1, the following needs to be satisfied:

$$\theta2+\alpha1+\alpha2\leq\arccos(r/R)$$

Because $\theta2+\alpha2=\gamma1$,

$$\alpha1\leq\arccos(r/R)-\gamma1.$$

When $\gamma$1 is a maximum inclination angle when the vehicle 1 drives uphill/downhill, and $\alpha$1 takes a maximum value arccos(r/R)-$\gamma$1, a highest position of A1 on the enclosure 100 can be determined. In some implementations, a specific position of A1 may be selected based on the drainage amount of the first liquid return channel 400.

After the maximum values of $\alpha$1 and $\alpha$2 are determined, only that designed $\alpha$1 and $\alpha$2 are less than or equal to the maximum values of $\alpha$1 and $\alpha$2 needs to be met during design of the first liquid return channel 400. In this way, positions of A1 and A2 can be determined. Then, sizes of a cavity inside the first liquid return channel 400 in a radial direction of the motor shaft 310 are also determined. The vehicle 1 can drive on slopes that are at angles of 0° to $\gamma$1. In addition, it is ensured that the highest point of the accommodating space inside the first liquid return channel 400 in the direction of gravity G is always lower than the lowest point of the outer surface of the rotor 320, and that the liquid in the first cavity 110 can enter the second cavity 120 through the first liquid return channel 400.

In an implementation, when the powertrain 10 is used in a vehicle 1 and the vehicle 1 is on level ground, the powertrain 10 is in the horizontal position (as shown in FIG. 11). In this case, the height of the second liquid return channel 500 in the direction of gravity G is less than the height of the first liquid return channel 400 in the direction of gravity G, a lowest point of the accommodating space inside the first liquid return channel 400 in the direction of gravity G is higher than the lowest point of the outer surface of the rotor 320, and the liquid in the first cavity 110 enters the second cavity 120 through the second liquid return channel 500. Endpoints at two ends of the accommodating space inside the second liquid return channel 500 in the circumferential direction C are B 1 and B2, respectively. A straight line that passes through the lowest point of the outer surface of the rotor 320 and that is in the horizontal direction is a first straight line S1'. B1 and B2 are both lower than the first straight line S1'. A connecting line between a center of the motor shaft 310 and B1 is a second straight line S2'. A connecting line between the center of the motor shaft 310 and B2 is a third straight line S3'. A straight line that passes through the center of the motor shaft 310 and that is perpendicular to the ground is a fourth straight line S4'. An included angle between the second straight line S2' and the fourth straight line S4' is $\beta$1. An included angle between the third straight line S3' and the fourth straight line S4' is $\beta$2.

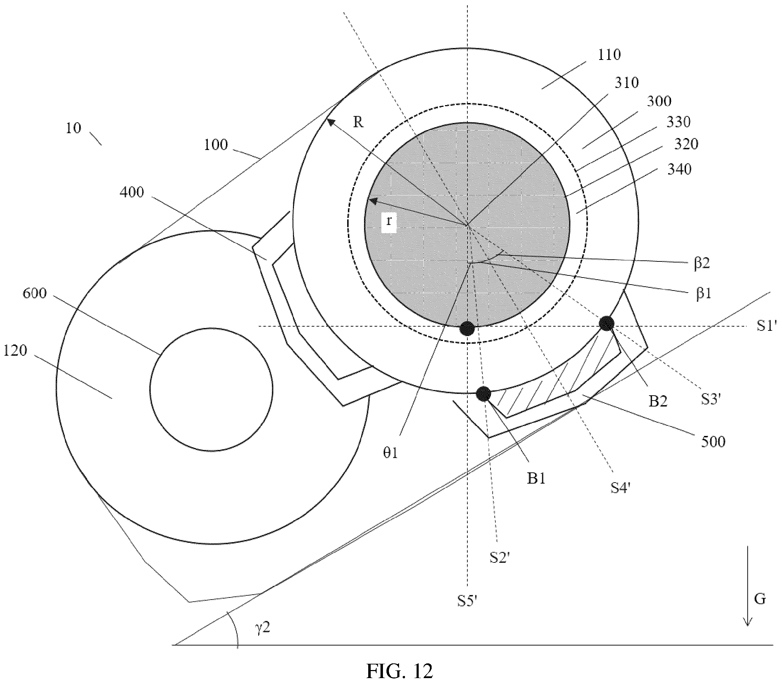

When the vehicle 1 is on a slope and B2 is higher than B1 (as shown in FIG. 12), an inclination angle of the slope, that is, an included angle between the slope and the horizontal direction, is γ2. In this case, the fourth straight line S4' is a straight line that passes through the center of the motor shaft 310 and that is perpendicular to the slope. A straight line that passes through the center of the motor shaft 310 and that is perpendicular to the horizontal direction is a fifth straight line S5'. An included angle between the fifth straight line S5' and the second straight line S2' is θ1. In this case, to meet that B2 is lower than the lowest point of the outer surface of the rotor 320, that is, B2 is lower than the first straight line S1', the following needs to be satisfied:

$$\theta1+\beta1+\beta2\leq\arccos(r/R)$$

In the foregoing, R is a radius of the enclosure 100 that is located on an outer side of the first cavity 110, and r is a radius of the rotor 320.
Because θ1+β1=γ2,

$$\beta2\leq\arccos(r/R)-\gamma2.$$

When γ2 is a maximum inclination angle when the vehicle 1 drives uphill/downhill, and β2 takes a maximum value arccos(r/R)-y2, a highest position of B2 on the enclosure 100 can be determined. In an implementation, a specific position of B2 may be selected based on a drainage amount of the second liquid return channel 500.
Likewise, when the vehicle 1 is on a slope and B1 is higher than B2 (as shown in FIG. 13), an inclination angle of the slope, that is, an included angle between the slope and the horizontal direction, is γ2. In this case, the fourth straight line S4' is a straight line that passes through the center of the motor shaft 310 and that is perpendicular to the slope. A straight line that passes through the center of the motor shaft 310 and that is perpendicular to the horizontal direction is a fifth straight line S5'. An included angle between the fifth straight line S5' and the third straight line S3' is θ2. In this case, to meet that B1 is lower than the lowest point of the outer surface of the rotor 320, that is, B1 is lower than the first straight line S1', the following needs to be satisfied:

$$\theta2+\beta1+\beta2\leq\arccos(r/R)$$

Because θ2+α2=γ2,

$$\beta1\leq\arccos(r/R)-\gamma2.$$

When γ2 is a maximum inclination angle when the vehicle 1 drives uphill/downhill, and β1 takes a maximum value arccos(r/R)-γ2, a highest position of B1 on the enclosure 100 can be determined. In an implementation, a specific position of B1 may be selected based on the drainage amount of the second liquid return channel 500.

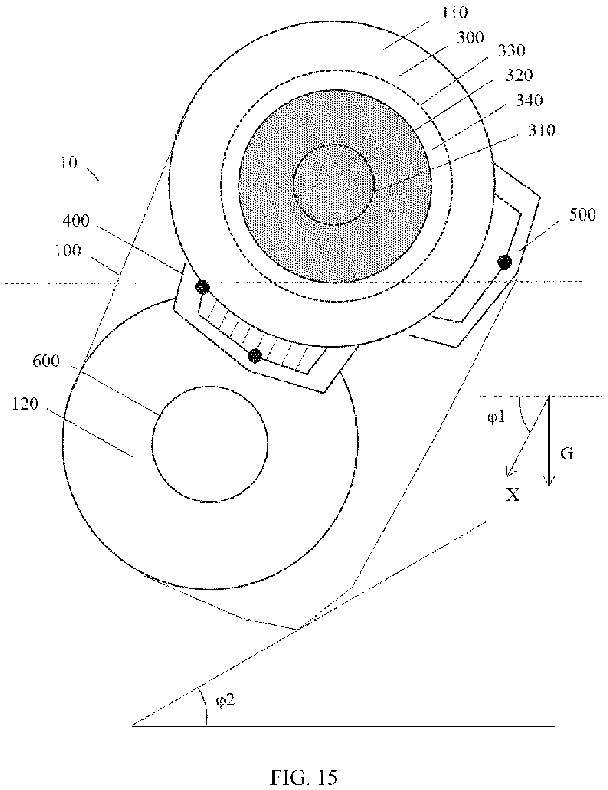

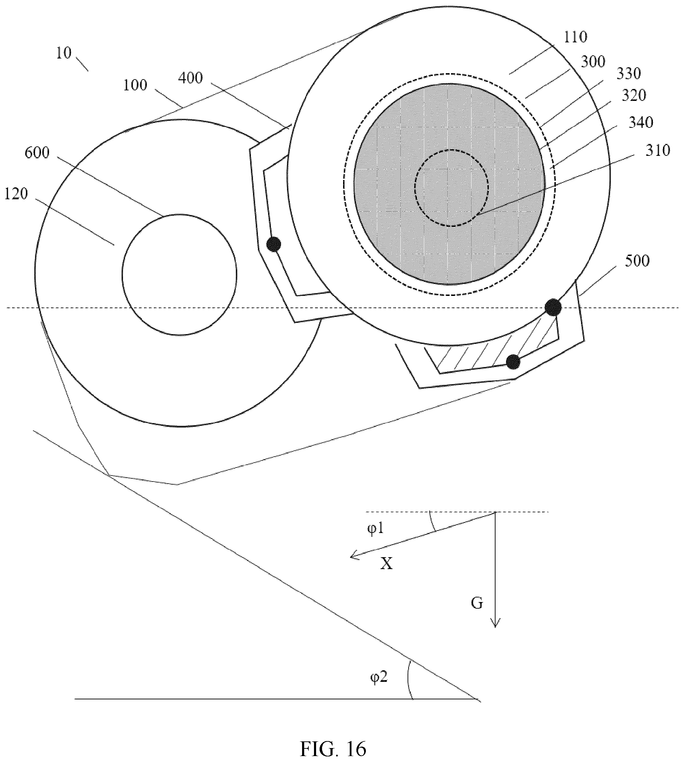

After the maximum values of β1 and β2 are determined, only that designed β1 and β2 are less than or equal to the maximum values of β1 and β2 needs to be met during design of the second liquid return channel 500. In this way, positions of B1 and B2 can be determined. Then, sizes of a cavity inside the second liquid return channel 500 in a radial direction of the motor shaft 310 are also determined. The vehicle 1 can drive on slopes that are at angles of 0° to γ2. In addition, it is ensured that the highest point of the accommodating space inside the second liquid return channel 500 in the direction of gravity G is always lower than the lowest point of the outer surface of the rotor 320, and that the liquid in the first cavity 110 can enter the second cavity 120 through the second liquid return channel 500.
In an implementation, when the powertrain 10 is used in a vehicle 1 and the vehicle 1 is on level ground, the powertrain 10 is at an angle to the horizontal direction (as shown in FIG. 14). In this case, lowest points of the accommodating space inside the first liquid return channel 400 and the second liquid return channel 500 in the direction of gravity G are both lower than the lowest point of the outer surface of the rotor 320, the highest points of the accommodating space inside the first liquid return channel 400 and the second liquid return channel 500 in the direction of gravity G may be higher than the lowest point of the outer surface of the rotor 320, and the liquid in the first cavity 110 enters the second cavity 120 through both the first liquid return channel 400 and the second liquid return channel 500. When the vehicle 1 drives on a slope: when the height of the second liquid return channel 500 in the direction of gravity G increases (as shown in FIG. 15) and the highest point of the accommodating space inside the first liquid return channel 400 in the direction of gravity G is lower than the lowest point of the outer surface of the rotor 320, the liquid in the first cavity 110 can enter the second cavity 120 through the first liquid return channel 400; and when the height of the first liquid return channel 400 in the direction of gravity G increases (as shown in FIG. 16) and the highest point of the accommodating space inside the second liquid return channel 500 in the direction of gravity G is lower than the lowest point of the outer surface of the rotor 320, the liquid in the first cavity 110 can enter the second cavity 120 through the second liquid return channel 500.
When the powertrain 10 is disposed in a vehicle at any angle, for example, 0° to 90°, the liquid is returned through a combination of the first liquid return channel 400 and the second liquid return channel 500 when the vehicle 1 drives on a flat road, and the liquid is returned through a combination of the two liquid return channels or through one separate liquid return channel when the vehicle 1 drives uphill or downhill. This design enables the powertrain 10 to make full use of the first liquid return channel 400 and the second liquid return channel 500 for liquid drainage. Therefore, the powertrain 10 can be disposed in vehicles 1 at angles that are in a wider range, enhancing adaptability of the powertrain 10.

In an implementation, when there is a large amount of liquid to be drained out of the first cavity 110 and two liquid return channels are required to work simultaneously for liquid drainage, the highest points of the accommodating space inside the first liquid return channel 400 and the second liquid return channel 500 may be set to be both lower than the lowest point of the outer surface of the rotor 320.

The powertrain 10 described above may be alternatively used in other devices that drive, for example, a ship.

In a possible implementation, the motor 300 includes a rotor 320, a first liquid level of the first liquid return channel 400 and a second liquid level of the second liquid return channel 500 are lower than a lowest point of an outer surface of the rotor 320 (as shown in FIG. 14), and the lowest point of the outer surface of the rotor 320 is a lowest point of the rotor 320 in the direction of gravity G that exists when the powertrain 10 is in use. When a drainage amount is designed for the first liquid return channel 400 and the second liquid return channel 500 based on a drainage amount required by the first cavity 110, the liquid does not fill the entire first liquid return channel 400 or the entire second liquid return channel 500 when the liquid is drained through both the first liquid return channel 400 and the second liquid return channel 500. In this case, although highest points of the first liquid return channel 400 and the second liquid return channel 500 are higher than the lowest point of the outer surface of the rotor 320, a liquid level of one (or two) liquid return channel that is of the first liquid return channel 400 and the second liquid return channel 500 and in which there is liquid is lower than the lowest point of the outer surface of the rotor 320. Therefore, the liquid in the first cavity 110 cannot fill the air gap 340 either, ensuring work efficiency and reliability of the motor 300. When a positional relationship between the first liquid return channel 400 and the second liquid return channel 500 changes and the liquid is drained through only one liquid return channel, it is only necessary to ensure that a liquid level of a liquid return channel in use is lower than the lowest point of the outer surface of the rotor 320. In this way, the liquid in the first cavity 110 cannot fill the air gap 340.

In a possible implementation, the powertrain 10 further includes the reducer 600 (as shown in FIG. 2), the reducer 600 is located in the second cavity 120, the reducer 600 includes an output shaft 610, the output shaft 610 is coupled to an end that is of the motor shaft 310 and that is located in the second cavity 120, the output shaft 610 and the motor shaft 310 are disposed side by side in a first direction X, the first liquid return channel 400 is located between the output shaft 610 and the motor shaft 310 in the first direction X, and the first direction X intersects the axial direction A of the motor shaft 310.

In an implementation, the output shaft 610 and the motor shaft 310 are disposed in parallel. In an implementation, when the first direction X is parallel to the direction of gravity G, the powertrain 10 is in the vertical position (as shown in FIG. 8), and when the first direction X is perpendicular to the direction of gravity G, the powertrain 10 is in the horizontal position (as shown in FIG. 11). In an implementation, when the powertrain 10 is installed in a vehicle 1, the output shaft 610 is located on a side that is of the motor shaft 310 and that is close to the ground in the direction of gravity G, and the height of the first liquid return channel 400 in the direction of gravity G is less than the height of the second liquid return channel 500 in the direction of gravity G.

In an implementation, the powertrain 10 further includes an MCU. The MCU may be configured to control the motor 300, the reducer 600, the oil pump, and the oil cooler to operate.

In a possible implementation, the motor 300 includes a first end face 301 and a second end face 302 that are provided in the axial direction A (as shown in FIG. 2), the first end face 301 is provided further away from the separator 200 than the second end face 302, a first liquid collection chamber 111 is formed between the first end face 301 and the enclosure 100, and the first liquid return channel 400 and the second liquid return channel 500 communicate with the first liquid collection chamber 111, and are configured to convey liquid in the first liquid collection chamber 111 to the second cavity 120. Part of the liquid in the first cavity 110 is collected into the first liquid collection chamber 111. The first liquid return channel 400 and the second liquid return channel 500 are provided, to drain the liquid in the first liquid collection chamber 111. In this way, the liquid in the first cavity 110 can be drained together, increasing liquid drainage efficiency of the first cavity 110.

In a possible implementation, a part that is of the enclosure 100 and that forms the first liquid collection chamber 111 is provided with a first liquid outlet 101 that runs through the enclosure 100 (as shown in FIG. 2), an end that is of the first liquid return channel 400 and that is close to the first liquid collection chamber 111 is provided with a first liquid inlet 410, the first liquid outlet 101 communicates with the first liquid inlet 410, the liquid in the first liquid collection chamber 111 flows through the first liquid outlet 101 and the first liquid inlet 410 sequentially and enters the first liquid return channel 400, and a size of the first liquid outlet 101 is greater than or equal to a size of the first liquid inlet 410 in the circumferential direction C of the motor shaft 310. With the size of the first liquid outlet 101 being set to be greater than or equal to the size of the first liquid inlet 410, the liquid in the first liquid collectioin chamber 111 can be drained into the first liquid return channel 400 more easily, preventing the liquid from accumulating in the first liquid collection chamber 111.

In an implementation, the size of the first liquid outlet 101 may alternatively be less than the size of the first liquid inlet 410.

In a possible implementation, the part that is of the enclosure 100 and that forms the first liquid collection chamber 111 is provided with a second liquid outlet that runs through the enclosure 100 (not shown in the figure), an end that is of the second liquid return channel 500 and that is close to the first liquid collection chamber 111 is provided with a second liquid inlet, the second liquid outlet communicates with the second liquid inlet, the liquid in the first liquid collection chamber 111 flows through the second liquid outlet and the second liquid inlet sequentially and enters the second liquid return channel 500, and a size of the second liquid outlet is greater than or equal to a size of the second liquid inlet in the circumferential direction C of the motor shaft 310. With the size of the second liquid outlet being set to be greater than or equal to the size of the second liquid inlet, the liquid in the first liquid collection chamb er 111 can be drained into the second liquid return channel 500 more easily, preventing the liquid from accumulating in the first liquid collection chamber 111.

In an implementation, the size of the second liquid outlet may alternatively be less than the size of the second liquid inlet.

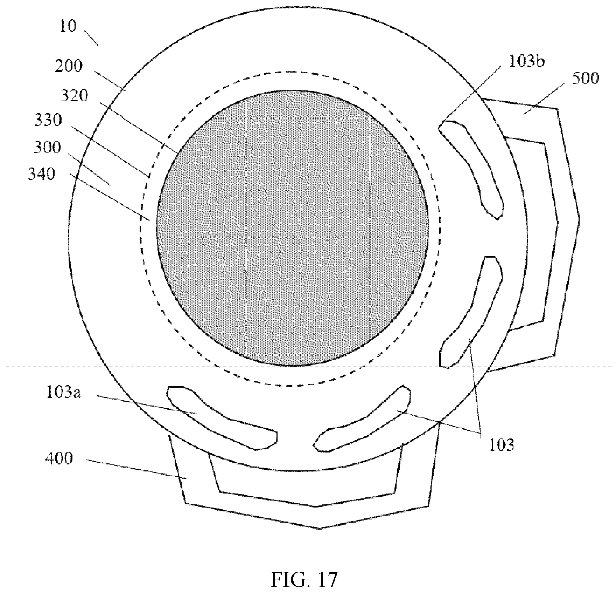

In a possible implementation, a second liquid collection chamber 112 is formed between the second end face 302 and the separator 200, the separator 200 is provided with third liquid outlets 103 that run through the separator 200 (as shown in FIG. 17), and the third liquid outlets 103 communicate with the second liquid collection chamber 112 and the second cavity 120, and are configured to convey liquid in the second liquid collection chamber 112 to the second cavity 120. Part of the liquid in the first cavity 110 is collected into the first liquid collection chamber 111. With the third liquid outlets 103 provided, the liquid in the second liquid collection chamber 112 is directly drained into the second cavity 120. In this way, the liquid in the first cavity 110 can be drained together, increasing liquid drainage efficiency of the first cavity 110.

In an implementation, an enclosure 100 located on an outer side of the second cavity 120 is provided with fourth liquid inlets that run through the enclosure 100 (not shown in the figure), ends that are of the first liquid return channel 400 and the second liquid return channel 500 and that are close to the second cavity 120 in the axial direction A are provided with fourth liquid outlets, the fourth liquid inlets communicate with the fourth liquid outlets, and the liquid in the first liquid return channel 400 and the second liquid return channel 500 flows through the fourth liquid outlets and the fourth liquid inlets sequentially and enters the second cavity 120.

In an implementation, the separator 200 is further provided with a fifth liquid inlet (not shown in the figure); the fifth liquid inlet communicates with the first cavity 110 and the second cavity 120; the fifth liquid inlet is located in a high part of the separator 200 in the direction of gravity G; after being cooled, the liquid in the second cavity 120 enters the first cavity 110 through the fifth liquid inlet, and enters the air gap 340 between the stator 330 and the rotor 320 through holes in a peripheral wall of the motor shaft 310; the liquid flows from a high position in the direction of gravity G to a low position in the direction of gravity G, to cool and lubricate the stator 330 and the rotor 320 in the first cavity 110; and from the low position in the direction of gravity G, the liquid in the first cavity 110 continues to flow into the second cavity 120 through a liquid return channel.

In an implementation, the motor shaft 310 is hollow. The liquid in the second cavity 120 enters the first cavity 110 through an interior of the motor shaft 310 after being cooled, and is used to cool and lubricate the stator 330 and the rotor 320 in the first cavity 110.

In a possible implementation, in the circumferential direction C of the motor shaft 310, at least some of the third liquid outlets 103 overlap the first liquid return channel 400, and at least some of the third liquid outlets 103 overlap the second liquid return channel 500; highest points of the third liquid outlets 103 are lower than the lowest point of the outer surface of the rotor; and the lowest point of the outer surface of the rotor is the lowest point of the rotor in the direction of gravity G that exists when the powertrain is in use. The separator 200 is provided with a plurality of third liquid outlets 103, for example, 103a and 103b in FIG. 17. Some of the third liquid outlets 103a are provided close to the first liquid return channel 400. Projections that are obtained when the third liquid outlets 103a are projected to the circumferential direction C at least partially overlap a projection that is obtained when the first liquid return channel 400 is projected to the circumferential direction C. When the first liquid return channel 400 is configured for draining the liquid in the first liquid collection chamber 111, the third liquid outlets 103a are configured for draining the liquid in the second liquid collection chamber 112. Some of the third liquid outlets 103b are provided close to the second liquid return channel 500. Projections that are obtained when the third liquid outlets 103b are projected to the circumferential direction C at least partially overlap a projection that is obtained when the second liquid return channel 500 is projected to the circumferential direction C. When the second liquid return channel 500 is configured for draining the liquid in the first liquid collection chamber 111, the third liquid outlets 103b are configured for draining the liquid in the second liquid collection chamber 112.

With the highest points of the third liquid outlets 103 lower than the lowest point of the outer surface of the rotor 320, the liquid in the second liquid collection chamber 112 cannot fill the air gap 340. To be specific, the liquid in the second liquid collection chamber 112 cannot fill the part that is of the air gap 340 and that is between the lowest point of the outer surface of the rotor 320 and the lowest point of the inner surface of the stator 330, ensuring work efficiency and reliability of the motor 300.

In an implementation, the third liquid outlets 103 are in a shape of a bar (as shown in FIG. 17), and the third liquid outlets 103 extend in the circumferential direction C. With this design, an area of the third liquid outlet 103 is increased, facilitating liquid drainage. In another implementation, the third liquid outlets 103 may alternatively be round, oval, or square, or be in an irregular shape.

Still with reference to FIG. 1, this application provides a vehicle 1. The vehicle 1 includes a vehicle body 11 and the powertrain 10 according to any one of the foregoing implementations. The powertrain 10 is installed in the vehicle body 11.

In a possible implementation, the powertrain 10 further includes a reducer 600, the reducer 600 is located in the second cavity 120, an output shaft 610 of the reducer 600 and the motor shaft 310 are disposed in a first direction X, an included angle between the first direction X and a horizontal direction is a first included angle $\varphi 1$ (as shown in FIG. 15), and highest points of accommodating space inside the first liquid return channel 400 and the second liquid return channel 500 are determined based on the first included angle $\varphi 1$, so that a liquid level of one (or two) liquid return channel that is of the first liquid return channel 400 and the second liquid return channel 500 and in which there is liquid is lower than a lowest point of an outer surface of the rotor 320 in the motor 300.

In a possible implementation, a steepest included angle at which the vehicle 1 can climb a slope is a second included angle $\varphi 2$ (as shown in FIG. 16), and the highest points of the accommodating space inside the first liquid return channel 400 and the second liquid return channel 500 are determined based on the first included angle $\varphi 1$ and the second included angle $\varphi 2$, so that a liquid level of one (or two) liquid return channel that is of the first liquid return channel 400 and the second liquid return channel 500 and in which there is liquid is lower than the lowest point of the outer surface of the rotor 320 in the motor 300.

The powertrain and the vehicle provided in embodiments of this application are described in detail above. The principles and embodiments in this application are described in this specification by using specific examples. The descriptions about embodiments are merely provided to help understand the method in this application and core ideas of the method. In addition, a person of ordinary skill in the art can make changes to both the specific embodiments and the application scope based on the ideas in this application. Therefore, the content of this specification shall not be construed as a limitation on this application.

**Claims**

1. A powertrain, wherein the powertrain comprises:

   an enclosure;
   a separator, separating an interior of the enclosure into a first cavity and a second cavity;
   a motor, located in the first cavity, wherein the motor comprises a motor shaft, and the motor shaft extends into the second cavity through the separator;
   a first liquid return channel, located on an outer side of the enclosure and communicating with the first cavity and the second cavity, and configured to convey liquid in the first cavity to the second cavity; and
   a second liquid return channel, located on the outer side of the enclosure and communicating with the first cavity and the second cavity, and configured to convey the liquid in the first cavity to the second cavity, wherein the second liquid return channel and the first liquid return channel at most partially overlap in a circumferential direction of the motor shaft.

2. The powertrain according to claim 1, wherein the second liquid return channel and the first liquid return channel are spaced apart in the circumferential direction of the motor shaft.

3. The powertrain according to claim 1, wherein in an axial direction of the motor shaft, at least a part of the first liquid return channel and at least a part of the second liquid return channel are located on a side that is of the separator and that faces the first cavity.

4. The powertrain according to claim 1, wherein the first liquid return channel and/or the second liquid return channel extend/extends in an axial direction of the motor shaft.

5. The powertrain according to claim 4, wherein in the circumferential direction of the motor shaft, an included angle between a first connecting line that is between the first liquid return channel and the motor shaft and a second connecting line that is between the second liquid return channel and the motor shaft is less than or equal to 90°; the first connecting line is a connecting line between a midpoint of the first liquid return channel in the circumferential direction of the motor shaft and the motor shaft in a radial direction of the motor shaft; and the second connecting line is a connecting line between a midpoint of the second liquid return channel in the circumferential direction of the motor shaft and the motor shaft in the radial direction of the motor shaft.

6. The powertrain according to claim 1, wherein the motor comprises a rotor, a highest point of accommodating space inside at least one of the first liquid return channel and the second liquid return channel in a direction of gravity is lower than a lowest point of an outer surface of the rotor, and the lowest point of the outer surface of the rotor is a lowest point of the rotor in the direction of gravity that exists when the powertrain is in use.

7. The powertrain according to claim 1, wherein the motor comprises a rotor, a first liquid level of the first liquid return channel and a second liquid level of the second liquid return channel are lower than a lowest point of an outer surface of the rotor, and the lowest point of the outer surface of the rotor is a lowest point of the rotor in a direction of gravity that exists when the powertrain is in use.

8. The powertrain according to claim 1, wherein the powertrain further comprises a reducer, the reducer is located in the second cavity, the reducer comprises an output shaft, the output shaft is coupled to an end that is of the motor shaft and that is located in the second cavity, the output shaft and the motor shaft are disposed side by side in a first direction, the first liquid return channel is located between the output shaft and the motor shaft in the first direction, and the first direction intersects an axial direction of the motor shaft.

9. The powertrain according to claims 1 to 8, wherein the motor comprises a first end face and a second end face that are provided in the axial direction, the first end face is provided further away from the separator than the second end face, a first liquid collection chamber is formed between the first end face and the enclosure, and the first liquid return channel and the second liquid return channel communicate with the first liquid collection chamber, and are configured to convey liquid in the first liquid collection chamber to the second cavity.

10. The powertrain according to claim 9, wherein a part that is of the enclosure and that forms the first liquid collection chamber is provided with a first liquid outlet that runs through the enclosure, an end that is of the first liquid return channel and that is close to the first liquid collection chamber is provided with a first liquid inlet, the first liquid outlet communicates with the first liquid inlet, the liquid in the first liquid collection chamber flows through the first liquid outlet and the first liquid inlet sequentially and enters the first liquid return channel, and a size of the first liquid outlet is greater than or equal to a size of the first liquid inlet in the circumferential direction of the motor shaft.

11. The powertrain according to claim 10, wherein a second liquid collection chamber is formed between the second end face and the separator, the separator is provided with third liquid outlets that run through the separator, and the third liquid outlets communicate with the second liquid collection chamber and the second cavity, and are configured to convey liquid in the second liquid collection chamber to the second cavity.

12. The powertrain according to claim 11, wherein in the circumferential direction of the motor shaft, at least some of the third liquid outlets overlap the first liquid return channel, and at least some of the third liquid outlets overlap the second liquid return channel; highest points of the third liquid outlets are lower than the lowest point of the outer surface of the rotor; and the lowest point of the outer surface of the rotor is the lowest point of the rotor in the direction of gravity that exists when the powertrain is in use.

13. A vehicle, wherein the vehicle comprises a vehicle body and the powertrain according to any one of claims 1 to 12, and the powertrain is installed in the vehicle body.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

EP 4 477 439 A1

FIG. 15

FIG. 16

FIG. 17

## INTERNATIONAL SEARCH REPORT

| International application No. |
|---|
| **PCT/CN2023/110062** |

| A. | CLASSIFICATION OF SUBJECT MATTER |
|---|---|

B60K11/02(2006.01)i; H02K5/20(2006.01)i

According to International Patent Classification (IPC) or to both national classification and IPC

| B. | FIELDS SEARCHED |
|---|---|

Minimum documentation searched (classification system followed by classification symbols)

IPC:B60K,H02K

Documentation searched other than minimum documentation to the extent that such documents are included in the fields searched

Electronic data base consulted during the international search (name of data base and, where practicable, search terms used)

CNTXT, ENTXTC, ENTXT, VEN, DWPI, WPABS, CJFD: 动力总成, 壳体, 隔板, 电机, 回液, 道, 腔体, 电机轴, 连通, 重叠, power, assembly, housing, shell, partition, motor, fluid, return, tract, cavity, shaft, communication, connect, overlap

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 115384290 A (HUAWEI DIGITAL POWER TECHNOLOGIES CO., LTD.) 25 November 2022 (2022-11-25)<br>claims 1-13 | 1-13 |
| X | CN 111697743 A (SHANGHAI WEIMAISI NEW ENERGY CO., LTD.) 22 September 2020 (2020-09-22)<br>description, paragraphs [0020]-[0039], and figures 1-10 | 1-4, 13 |
| A | CN 209666800 U (BYD CO., LTD.) 22 November 2019 (2019-11-22)<br>description, paragraphs [0036]-[0062], and figures 1-6 | 1-13 |
| A | CN 206884701 U (JIANGSU ENE CARBON ENERGY TECHNOLOGY CO., LTD.) 16 January 2018 (2018-01-16)<br>entire document | 1-13 |
| A | US 2011168356 A1 (CONTROLLED POWER TECHNOLOGIES LTD.) 14 July 2011 (2011-07-14)<br>entire document | 1-13 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 October 2023** | **23 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/110062**

| Patent document cited in search report | | | Publication date (day/month/year) | Patent family member(s) | | | Publication date (day/month/year) |
|---|---|---|---|---|---|---|---|
| CN | 115384290 | A | 25 November 2022 | None | | | |
| CN | 111697743 | A | 22 September 2020 | None | | | |
| CN | 209666800 | U | 22 November 2019 | None | | | |
| CN | 206884701 | U | 16 January 2018 | None | | | |
| US | 2011168356 | A1 | 14 July 2011 | GB | 2463483 | A | 17 March 2010 |
| | | | | WO | 2010029336 | A1 | 18 March 2010 |
| | | | | JP | 2012502617 | A | 26 January 2012 |
| | | | | US | 2013278089 | A1 | 24 October 2013 |
| | | | | US | 2014203673 | A1 | 24 July 2014 |
| | | | | GB | 2465059 | A | 12 May 2010 |
| | | | | EP | 2321887 | A1 | 18 May 2011 |
| | | | | KR | 20130133100 | A | 05 December 2013 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210995005